# EUROPÄISCHE PATENTSCHRIFT

(11) **EP 3 488 130 B1**
(45) Veröffentlichungstag und Bekanntmachung des Hinweises auf die Patenterteilung: **02.11.2022**
(21) Anmeldenummer: 17755060.5
(22) Anmeldetag: 17.07.2017
(51) Int. Cl.: F16K 11/074, F16K 27/02, F16K 27/04

(54) **MASSENSTROMREGEL- ODER VENTILEINHEIT**
MASS FLOW REGULATOR OR VALVE UNIT
UNITÉ DE RÉGULATION DE DÉBIT MASSIQUE OU UNITÉ SOUPAPE

(30) Priorität: 20.07.2016 DE 202016004427 U
(43) Veröffentlichungstag der Anmeldung: 29.05.2019
(73) Patentinhaber: Voss Automotive GmbH, 51688 Wipperfürth (DE)
(72) Erfinder: RAJAN, Philippose, 50999 Köln (DE); AKCAN, Ali, 51688 Wipperfürth (DE); KOHLGRÜBER, Markus, 51789 Lindlar (DE); SCHWARZKOPF, Otfried, 51515 Kürten (DE)
(74) Vertreter: Rebbereh, Cornelia
(86) Internationale Anmeldenummer: PCT/EP2017/000854
(87) Internationale Veröffentlichungsnummer: WO 2018/015008

(56) Entgegenhaltungen:
- EP-A1- 0 256 161
- EP-A1- 2 142 829
- EP-A1- 3 037 704
- DE-B3-102011 119 021
- DE-U1- 20 300 467
- US-A- 2 043 106
- US-A- 2 529 505
- US-A- 2 857 929
- US-A1- 2014 261 813

## Beschreibung

Die Erfindung betrifft eine Massenstromregel- oder Ventileinheit, umfassend zumindest einen Gehäuseteil mit einer Anzahl von Anschlusseinrichtungen zum Anschließen von Leitungen, zumindest ein Ventilkörper, insbesondere eine Ventilscheibe, und zumindest ein Stellelement zum Ansteuern des Ventilkörpers, insbesondere der Ventilscheibe.

Massenstromregeleinheiten sind in Form von Ventilen im Stand der Technik bekannt. Gerade in einem Kühlmittelsystem für Fahrzeuge mit Hybrid- oder reinem Elektroantrieb ist die Verwendung verschiedener Sensoren und Ventile zum Regeln bzw. Steuern eines Massenstroms eines Kühlmittels zu den einzelnen zu temperierenden Komponenten bekannt. Die verschiedenen Sensoren und Ventile sind hierbei an unterschiedlichen Stellen im Kühlmittelsystem angeordnet, um den Massenstrom im Kühlmittelsystem zum Temperieren einer Batterie sowie weiterer Komponenten zu regeln. Zum Verstellen der Ventile sind Aktuatoreinheiten vorgesehen, die insbesondere über einen Stellantrieb die jeweilige gewünschte Ventilstellung einstellen.

Aus der DE 10 2012 022 213 A1 ist eine Ventileinrichtung bekannt, mit einem Ventil, insbesondere Scheibenventil, das ein erstes Gehäuse mit mehreren Anschlüssen für ein flüssiges und/oder gasförmiges Medium aufweist. Ferner umfasst die Ventileinrichtung eine Antriebseinheit, die ein zweites Gehäuse mit einer darin angeordneten Antriebseinrichtung aufweist, wobei die Gehäuse beabstandet zueinander angeordnet sind. Das Ventil weist eine Steuerwelle und die Antriebseinrichtung eine mit der Antriebseinrichtung wirkverbundene und mit der Steuerwelle durch eine Koppeleinrichtung wirkverbundene Antriebswelle auf. Die Koppeleinrichtung ist zwischen dem ersten und dem zweiten Gehäuse angeordnet. Die Anschlüsse sind einstückig mit einem Verteilergehäuse ausgebildet. Ein Zulaufanschluss mündet in Axialrichtung oberhalb eines ersten Ablaufanschlusses in das Verteilergehäuse, nahe an einem Deckel, der das offene Ende des Verteilergehäuses verschließt. Etwa rechtwinklig zu dem ersten Ablaufanschluss ist ein zweiter Ablaufanschluss an dem Verteilergehäuse vorgesehen. Der Zulaufanschluss ist ebenfalls etwa rechtwinklig zu dem zweiten Ablaufanschluss angeordnet.

Aus der US 2,857,929 A ist ein Mehrfachanschlussventil bekannt, das eine rückwärtige Platte, ein Gehäuse, das an die rückwertige Platte angefügt ist und eine Flüssigkeitsdruckkammer damit bildet, einen Rotor innerhalb des Gehäuses, der in unterschiedliche Drehrichtungen bewegbar ist, um den Fluidstrom durch die rückwärtige Platte zu steuern, und Mittel zum Umschalten des Rotors zwischen den unterschiedlichen Drehpositionen umfasst, wobei die rückwärtige Platte eine flache Deckplatte mit einem zentralen Anschluss und eine Vielzahl von ringförmig beabstandeten Anschlüssen umfasst, die gleichmäßig zueinander beabstandet sind, wobei ein längliches zentrales Kammerelement sich axial bezüglich des zentralen Anschlusses erstreckt und einen polygonalen Befestigungsflansch an der Deckplatte aufweist. Eine Vielzahl von L-förmigen Kammerelementen kommuniziert an einem Ende von diesem jeweils mit einer Durchgangöffnung und erstreckt sich radial von dieser nach außen. Befestigungsflansche an diesem einen Ende der Kammerelemente weisen die Form eines kegelstumpfförmigen Abschnitts auf, wobei sich diese Flansche benachbart zu den Flanschen auf der zentralen Kammer und benachbart zueinander erstrecken.

Die DE 10 2011 119 021 B3 offenbart eine Vorrichtung mit mehreren Einlässen und einem Auslass, wobei die Einlässe jeweils mit einem Material-VorratsBehältnis verbindbar sind und wobei zum Bereitstellen einer schaltbaren Verbindung zwischen jeweils einem der mehreren Einlässe und dem Auslass ein relativ zu den Einlässen verlagerbares Stellglied mit einem Durchgangskanal vorgesehen ist. Der Durchgangskanal kann wahlweise mit jeweils einem unterschiedlichen Einlass in kommunizierende Verbindung gebracht werden, um dem Auslass sukzessive unterschiedliche Materialien zuführen zu können. Die Vorrichtung umfasst ein Gehäuse, in dem das Stellglied und eine Eingangsscheibe untergebracht sind. Die Eingangsscheibe umfasst eine Eingangsseite und eine Ausgangsseite. Auf der Eingangsseite befinden sich die Einlässe, wobei die Zahl der Einlässe der Zahl der maximal an der Vorrichtung anschließbaren Materialbehältnisse entspricht. Auf der Eingangsseite der Eingangsscheibe ist ferner ein Einlass für ein Spülmittel vorgesehen.

Aus der US 2,043,106 A ist Gasbrennersteuerungsmechanismus bekannt, der eine drehbare Ventilachse und eine Einstellscheibe umfasst. Ferner sind ein Ventilsitz, ein Gussteil zur Aufnahme der Einstellscheibe und der drehbaren Ventilachse vorgesehen. In dem Gussteil sind Gaszuführstutzen vorgesehen, die mit geeigneten rohrförmigen Elementen zusammenwirken. Die Gaszuführstutzen sind in Schrauböffnungen des Gussteils eingeschraubt angeordnet.

Aus der US 2014/0261813 A1 ist eine Umlenkkartusche für ein Fluidmischventil bekannt, das einen Einlassadapter mit einem ersten Einlassanschluss, einem zweiten Einlassanschluss, einem ersten Auslassanschluss und einem zweiten Auslassanschluss umfasst. Die Kartusche enthält ferner eine Umlenkplatte mit einem ersten Einlasskanal und einem zweiten Einlasskanal. Die Umlenkplatte ist drehbar in Bezug auf den Einlassadapter zwischen einer ersten Endposition, einer zweiten Endposition und einer neutralen Position zwischen der ersten und zweiten Endposition. Ein Drehen der Umlenkplatte aus der neutralen Position in Richtung der ersten Endposition vergrößert den Volumenstrom durch die Kartusche und lenkt das Fluid zu dem ersten Auslassanschluss. Ein Drehen der Umlenkplatte aus der neutralen Position in Richtung der zweiten Endposition vergrößert den Volumenstrom durch die Kartusche und lenkt das Fluid zu dem zweiten Auslassanschluss.

Bekannt sind ferner 3/2-Wegeventile sowie 4/3-Wegeventile mit rotatorischem Schieber, wie beispielsweise von der Firma Cooper Standard für den GM Opel Ampera oder auch als sog. Thermomanagement-Modul für den BMW 116i, das von der Firma Illinois Tool Works BallStat unter der Artikelnummer 7 644 811-06 angeboten wird. Diese Module des Standes der Technik sind sehr komplexe Einheiten, die sehr aufwendig und von ihrer Baugröße her ausladend und groß ausgebildet sind.

Die Massenstromregel- oder Ventileinheiten des Standes der Technik sind somit komplexe Einheiten mit in unterschiedlichsten Richtungen von diesen abstehenden Anschlusseinrichtungen. Diese Massenstromregel- oder Ventileinheiten haben daher einen sehr großen Platzbedarf und lassen zugleich im Wesentlichen keine Variationsmöglichkeiten zu.

Der vorliegenden Erfindung liegt daher die Aufgabe zugrunde, eine Massenstromregel- oder Ventileinheit nach dem Oberbegriff des Anspruchs 1 dahingehend fortzubilden, dass eine platzsparende und kompakte Bauweise ermöglicht wird, die zugleich Variationsmöglichkeiten für die Anschlusseinrichtungen von dieser zulässt.

Die Aufgabe wird für eine Massenstromregel- oder Ventileinheit nach dem Oberbegriff des Anspruchs 1 dadurch gelöst, dass der zumindest eine Ventilkörper zumindest ein drehbares bzw. drehbar gelagertes Blendenelement und zumindest ein feststehendes Blendenteil umfasst, die Anschlusseinrichtungen über eine Schnittstelle an dem Gehäuseteil lösbar oder dauerhaft befestigt angeordnet sind und der Gehäuseteil Anschlussöffnungen zum Anschließen der Anschlusseinrichtungen aufweist, wobei alle Anschlussöffnungen auf einer Seite des Gehäuseteils angeordnet sind und ein Niederhalterelement zum Niederhalten und Befestigen der Anschlusseinrichtungen an dem Gehäuseteil vorgesehen ist, wobei das eine Niederhalterelement zumindest einen Abschnitt der jeweiligen Anschlusseinrichtungen übergreift, um diese auf dem Gehäuseteil zu halten und zu fixieren.

Weiterbildungen der Erfindung sind in den abhängigen Ansprüchen definiert.

Dadurch wird eine Massenstromregel- oder Ventileinheit geschaffen, bei der die Anschlusseinrichtungen nicht an dem Gehäuseteil der Massenstromregel- oder Ventileinheit angeformt sind, sondern über eine Schnittstelle befestigt werden. Die Anschlusseinrichtungen dienen dem Anschließen von Leitungen an diesen, wie Schlauchleitungen und/oder Rohrleitungen. Durch das Vorsehen zumindest einer Schnittstelle an dem Gehäuseteil ist eine Modularität gegeben, so dass anwendungsspezifisch solche Anschlusseinrichtungen an der Massenstromregel-oder Ventileinheit befestigt werden können, die dort für den jeweiligen Anwendungsfall benötigt werden. Über die Schnittstelle an dem Gehäuseteil ist sowohl eine lösbare als auch eine letztlich dauerhafte Befestigung der Anschlusseinrichtungen dort möglich, wobei eine dauerhafte Befestigung bevorzugt wird.

Die Massenstromregel- oder Ventileinheit bzw. deren Gehäuseteil ist mit Anschlussöffnungen versehen, an die die Anschlusseinrichtungen angeschlossen werden. Alle Anschlussöffnungen sind auf nur einer Seite des Gehäuseteils der Massenstromregel- oder Ventileinheit angeordnet, so dass eine sehr kompakte Einheit entsteht. Im Unterschied zu den Lösungen des Standes der Technik stehen die Anschlusseinrichtungen nicht auf allen Seiten des Gehäuseteils der Massenstromregel- oder Ventileinheit von diesem ab, sondern nur in Axialrichtung des Gehäuseteils an einem Ende von diesem. An diesem Ende ist der Gehäuseteil mit einer Anzahl von Anschlussöffnungen zum Anschließen der Anschlusseinrichtungen versehen. Die Anschlusseinrichtungen selbst sind vorteilhaft an ihrem Anschlussende zum Anschließen an den Anschlussöffnungen des Gehäuseteils gleich oder im Wesentlichen gleich ausgebildet, so dass die Anschlusseinrichtungen beliebig gegeneinander ausgetauscht werden können. Auch die Ausrichtung der Anschlusseinrichtungen am Gehäuseteil kann anwendungsoptimiert variiert werden, da die Anschlusseinrichtungen dort, je nach Ausgestaltung, beliebig zu ihrer Anschlussebene gedreht geschlossen werden können. Die Anschlusseinrichtungen selbst können ferner anwendungsoptimiert konfiguriert werden. Durch eine optimierte Konfiguration und Ausrichtung wird eine platzsparende und strömungsoptimierte Anordnung der Anschlusseinrichtungen ermöglicht. Es ist somit ein modularer Aufbau der Massenstromregel- oder Ventileinheit vorgesehen.

Die Massenstromregel- oder Ventileinheit dient zum Regeln bzw. Steuern eines Massenstroms, wobei hierzu der zumindest eine Ventilkörper im Innern des Gehäuseteils der Massenstromregel- oder Ventileinheit dient. Der Ventilkörper umfasst zumindest ein drehbares bzw. drehbar gelagertes Blendenelement, insbesondere eine Steuerscheibe, und zumindest ein feststehendes Blendenteil. Das zumindest eine Stellelement greift an dem Ventilkörper, insbesondere dem zumindest einen drehbaren bzw. drehbar gelagerten Blendenelement, insbesondere der Steuerscheibe, an und dient zu dessen Verstellen. Das Stellelement ist beispielsweise nach Art einer Welle ausgebildet, kann ein- oder mehrteilig sein. Zum Drehantreiben bzw. Verstellen des drehbar gelagerten Blendenelements kann es mit einer Aktuatoreinheit verbunden werden oder sein, die, gesteuert von einer Steuerungseinrichtung, ein entsprechendes Stellsignal erhält und das Stellelement betätigt, um auf den Ventilkörper einzuwirken. Durch Verstellen des Ventilkörpers bzw. insbesondere des drehbaren/drehbar gelagerten Blendenelements, wie der Steuerscheibe, im Innern des Gehäuseteils der Massenstromregel- oder Ventileinheit kann strömendes Medium bezüglich seines Massenstroms gesteuert werden. In den Gehäuseteil der Massenstromregel- oder Ventileinheit einströmendes und aus diesem ausströmendes Medium kann durch den Ventilkörper bezüglich seines Massenstroms und dadurch seiner Medientemperatur, also der resultierenden Medientemperatur, geeignet gesteuert werden. Dies kann sich insbesondere bei Kühlmittelsystemen als vorteilhaft erweisen, um eine entsprechende Menge an Kühlmittel und eine gewünschte Temperaturverteilung an Kühlmittel in unterschiedliche Leitungen für das Temperieren unterschiedlicher Komponenten, die über das an der Massenstromregel- oder Ventileinheit angeschlossene Kühlmittelsystem gekühlt bzw. temperiert werden sollen, zuzumessen bzw. einzustellen.

Durch das Anordnen der Anschlussöffnungen und dementsprechend auch der Anschlusseinrichtungen in Axialrichtung des Gehäuseteils der Massenstromregel-oder Ventileinheit an einem Ende von diesem kann eine platzsparende, kompakte und strömungsoptimierte Bauweise der Massenstromregel- oder Ventileinheit geschaffen werden. Alle Anschlusseinrichtungen, also diejenigen, durch die ein Medium in das Innere des Gehäuseteils der Massenstromregel- oder Ventileinheit zugeführt und diejenigen, durch die der Massenstrom aus dem Gehäuseteil der Massenstromregel- oder Ventileinheit wieder herausgeführt werden soll, sind auf einer Seite der Massenstromregel- oder Ventileinheit angeordnet.

Vorteilhaft sind die Anschlusseinrichtungen benachbart zu dem Ventilkörper angeordnet und erstrecken sich bis an den Ventilkörper oder bis nahezu an den Ventilkörper. In jedem Falle ist keine zusätzliche Strömungskammer im Bereich zwischen dem Anschluss der Anschlusseinrichtungen an den Gehäuseteil der Massenstromregel-oder Ventileinheit und dem Ventilkörper vorgesehen. Vielmehr ist ein direkter Anschluss der Anschlusseinrichtungen im Bereich des Ventilkörpers vorgesehen, insbesondere des feststehenden Blendenelements, das wiederum benachbart zu dem drehbar gelagerten Blendenelement, wie einer Steuerscheibe, angeordnet ist. Die Schnittstelle zum Anschluss der Anschlusseinrichtungen am Gehäuseteil ist somit direkt benachbart zu dem zumindest einen Ventilkörper angeordnet. Dies führt einerseits aufgrund des Verzichts auf eine zusätzliche Misch- oder Trennkammer in Innern des Gehäuseteils zu einer Platzersparnis. Andererseits ist eine direkte Anbindung der Anschlusseinrichtungen an den Gehäuseteil auch vorteilhaft im Hinblick auf eine Strömungsoptimierung.

Vorteilhaft sind eine zentrale Anschlussöffnung und diese umgebend weitere Anschlussöffnungen vorgesehen, wobei die weiteren Anschlussöffnungen im Wesentlichen gleich ausgebildet sind. Die zentrale Anschlussöffnung kann insbesondere einen größeren Durchmesser aufweisen als die diese umgebenden weiteren Anschlussöffnungen. An alle Anschlussöffnungen können entsprechend ausgebildete Anschlusseinrichtungen angeschlossen werden, wobei die die zentrale Anschlussöffnung umgebenden weiteren Anschlussöffnungen vorteilhaft zumindest im Wesentlichen den gleichen lichten Innendurchmesser bzw. Durchmesser eines diese umgebenden Befestigungskragens aufweisen, so dass für alle Anschlusseinrichtungen, die an diesen Anschlussöffnungen angeschlossen werden können, die gleichen Anschlussabmessungen bzw. Schnittstellen vorgesehen werden können. Hierdurch ist eine beliebige Austauschbarkeit der Anschlusseinrichtungen möglich, so dass eine kostengünstige Lösung geschaffen wird. Demensprechend können gezielt Anschlusseinrichtungen, die für den jeweiligen Anwendungsfall benötigt werden, ausgewählt und an einer beliebigen Anschlussöffnung angeschlossen werden. Beispielsweise können Teilmassenströme durch die die zentrale Anschlussöffnung umgebenden weiteren Anschlussöffnungen bzw. die dort angeschlossenen Anschlusseinrichtungen in das Innere des Gehäuseteils der Massenstromregel- oder Ventileinheit zugeführt und durch die zentrale Anschlussöffnung bzw. die dort angeschlossene Anschlusseinrichtung als Gesamtmassenstrom bzw. Mischmassenstrom wieder aus der Massenstromregel- oder Ventileinheit ausgeführt werden. Ebenso ist ein Durchströmen der Massenstromregel- oder Ventileinheit in umgekehrter Richtung möglich, um ein Aufteilen eines Gesamtmassenstroms in Teilmassenströme zu ermöglichen.

Um eine optimale Anschließbarkeit der Anschlusseinrichtungen an Leitungen beispielsweise in einem Fahrzeug, in dem die Massenstromregel- oder Ventileinheit eingebaut wird, zu schaffen, können die einzelnen Anschlusseinrichtungen unterschiedlich ausgebildet werden, insbesondere in einem unterschiedlichen Winkel abgewinkelt sein, jeweils angepasst an den zur Verfügung stehenden Bauraum und den jeweiligen Anwendungsfall sowie die Positionierung der jeweils anzuschließenden Leitungen. Die Anschlusseinrichtungen können somit insbesondere in einem Winkel von 0 bis 135° abgewinkelt ausgebildet sein, wie in einem Winkel von 0° oder 90° oder 135° . Die Winkelangaben beziehen sich jeweils auf den Winkel zwischen dem Anschlussende der Anschlusseinrichtung, der mit der Anschlussöffnung im Gehäuseteil der Massenstromregel- oder Ventileinheit verbunden wird, und der Achse des Anschlussabschnitts der Anschlusseinrichtung, an dem eine Leitung angeschlossen wird.

Auch der Anschlussabschnitt der Anschlusseinrichtung kann unterschiedlich ausgestaltet sein, je nachdem, welche Art von Leitung dort in welcher Form angeschlossen werden soll. Der Anschlussabschnitt kann zum Anschließen einer Schlauchleitung oder einer Rohrleitung geeignet ausgestaltet sein, bei Anschließen einer Schlauchleitung beispielsweise über das Befestigen der Schlauchleitung über Schlauchschellen an diesem oder bei Vorsehen einer Rohrleitung über das Ausbilden einer Steckkupplung, eines Steckers mit Muffenteil etc. Beispielsweise kann der Anschlussabschnitt auch als Dornabschnitt, als im Wesentlichen einheitlich glatt bzw. eben ausgebildeter Abschnitt, als teilweise ausgebauchter Abschnitt bzw. VDA-Kontur oder in anderer Form ausgebildet werden. Auch die jeweilige Richtung, in die der Anschlussabschnitt der jeweiligen Anschlusseinrichtungen nach der Montage von diesen auf dem Gehäuseteil der Massenstromregel- oder Ventileinheit zeigen soll, kann anwendungsspezifisch vor dem Fügen bzw. vor der Montage variiert werden.

Ferner ist es möglich, im Innern oder im Bereich der Anschlusseinrichtung sensorische Mittel, wie beispielsweise einen Temperatursensor oder zumindest einen anderen Sensor, anzuschließen oder anzuordnen. Beim Strömen von Medium durch die Anschlusseinrichtung kann dabei beispielsweise eine Temperaturmessung bezüglich des Mediums erfolgen. Solche sensorischen Mittel können nicht nur hineinragend in das Innere des Anschlussabschnitts der Anschlusseinrichtung vorgesehen werden, sondern auch insbesondere plan in einer Gehäusewandung des Gehäuseteils der Massenstromregel- oder Ventileinheit über oder unter dem Ventilkörper, um im strömenden Medium die gewünschte Temperaturmessung vornehmen zu können.

Als weiter vorteilhaft erweist es sich, die Anschlusseinrichtung dahingehend auszubilden, dass diese außer dem zumindest einen Anschlussabschnitt zumindest einen Kammerabschnitt aufweist. Der Kammerabschnitt ist vorteilhaft in dem Bereich angeordnet, der mit dem Gehäuseteil der Massenstromregel- oder Ventileinheit verbunden wird. Durch die an dem Gehäuseteil der Massenstromregel- oder Ventileinheit angeschlossenen Kammerabschnitte der Anschlusseinrichtungen kann eine mehrteilige Misch- oder Trennkammer geschaffen werden, so dass der Gehäuseteil der Massenstromregel- oder Ventileinheit im Bereich der Anschlusseinrichtungen nicht mit einer zusätzlichen Strömungskammer, also Misch-oder Trennkammer, versehen zu werden braucht. Vielmehr wird durch die einzelnen Kammerabschnitte der Anschlusseinrichtungen eine Misch- oder Trennkammer für die zu mischenden oder zu trennenden, durch die an den Gehäuseteil angeschlossenen Anschlusseinrichtungen ein- und ausströmenden Medien geschaffen, also eine Strömungskammer zum Durchströmen mit Medium. Hierdurch entsteht eine besonders platzsparende Lösung, die keine zusätzliche Strömungs- bzw. Misch- oder Trennkammer bzw. keine zusätzlichen Kammern im Bereich der Anschlusseinrichtungen erfordert.

Der Gehäuseteil der Massenstromregel- oder Ventileinheit kann im Bereich der Anschlussöffnungen zum Anschließen der Anschlusseinrichtungen den feststehenden Blendenteil des Ventilkörpers bilden, wobei das zumindest eine drehbare Blendenelement, wie eine Steuerscheibe, im Innern des Gehäuseteils vorzugsweise benachbart zu diesem angeordnet ist. Durch Rotieren des drehbaren Blendenelements bzw. der Steuerscheibe gegenüber dem feststehenden Blendenteil wird ein durch die Öffnungen in dem feststehenden Blendenteil und dem drehbaren Blendenelement hindurch strömender oder hindurch strömbarer Massenstrom eingestellt. Dieser richtet sich nach dem Überdeckungsgrad der Öffnungen. Bei Vorsehen der Kammerabschnitte an den Anschlusseinrichtungen kann eine Temperaturmessung eines Massenstroms im Totvolumen einer Anschlusseinrichtung erfolgen.

Als weiter vorteilhaft erweist es sich, zumindest eine radiale Abdichtung im Verbindungsbereich zwischen Anschlusseinrichtung und Anschlussöffnung im Gehäuseteil der Massenstromregel- oder Ventileinheit vorzusehen. Eine solche radiale Abdichtung ist nicht nur kostengünstig, sondern erfordert auch keine axiale Vorspannung der Anschlusseinrichtung in der Anschlussöffnung des Gehäuseteils der Massenstromregel- oder Ventileinheit. Ferner können Toleranzen, zumindest in einem bestimmten Umfang, bei Vorsehen einer radialen Abdichtung ausgeglichen werden, die einerseits beim Fertigen der Anschlussöffnungen im Gehäuseteil der Massenstromregel- oder Ventileinheit auftreten können und andererseits beim Fertigen der Anschlusseinrichtungen bzw. des jeweiligen Anschlussendes der Anschlusseinrichtungen, das mit der Anschlussöffnung im Gehäuseteil des Massenstromregel- oder Ventileinheit verbunden werden soll.

Radialdichtungen, insbesondere in Form von O-Ringen, führen ferner zu einer einfachen Montage, da diese vorab endseitig auf den jeweiligen Anschlussabschnitt der Anschlusseinrichtung, der in die Anschlussöffnung im Gehäuseteil der Massenstromregel- oder Ventileinheit eingefügt werden soll, aufgefügt werden können.

Über die Massenstromregel- oder Ventileinheit ist einerseits ein Mischen, andererseits ein Teilen eines Gesamtmassenstroms in Teilmassenströme und andererseits ein zumindest bereichsweise stufenloses Einstellen zumindest eines Massenstroms im Sinne eines Proportionalventils, beispielsweise in einem Bereich von 0 % bis 100 %, insbesondere 30 % bis 70 % des Massenstroms möglich.

Zumindest eine der Anschlusseinrichtungen kann vorteilhaft als Blindstopfen ausgebildet sein. Hierdurch ist es möglich, die Anzahl der zuführenden und abführenden Anschlusseinrichtungen, an die Leitungen angeschlossen werden sollen, zu variieren. Beispielsweise kann ein Gehäuseteil mit einer zentralen Anschlussöffnung und vier diese umgebenden weiteren Anschlussöffnungen versehen werden. Um sowohl ein 3/2-Wegeventil als auch ein 4/3-Wegeventil als auch ein 5/4 Wegeventil ausbilden zu können, erweist es sich als vorteilhaft, zumindest eine Anschlusseinrichtung als Blindstopfen auszubilden. Gehäuseteil und/oder Anschlusseinrichtungen sind somit dahingehend konfiguriert, dass ein 3/2-Wegeventil oder ein 4/3-Wegeventil oder ein 5/4-Wegeventil ausgebildet ist oder werden kann. Bei Ausbilden als 3/2-Wege-Proportionalventil sind drei Anschlusseinrichtungen und zwei Schaltstellungen vorgesehen, während bei Ausbilden als 4/3-Wege-Proportionalventil vier Anschlusseinrichtungen angeschlossen werden und drei Schaltstellungen hierdurch geschaffen werden. Entsprechend sind bei Ausbilden als 5/4-Wege-Proportionalventil fünf Anschlusseinrichtungen angeschlossen und vier Schaltstellungen vorgesehen. Durch das Vorsehen von als Blindstopfen ausgebildeten Anschlusseinrichtungen kann ein und derselbe Gehäuseteil sowohl als 3/2-Wege-Proportionalventil als auch als 4/3-Wege-Proportionalventil und ohne Anordnen des Blindstopfens als 5/4-Wege-Proportionalventil ausgebildet werden. Somit ist eine große Flexibilität möglich, da lediglich die jeweils gewünschten Anschlusseinrichtungen, die in einem Sortiment vorgehalten werden können, an dem gleichbleibenden Gehäuseteil angebracht werden und somit anwendungsspezifisch beliebige Ausgestaltungen der Massenstromregel- oder Ventileinheit je nach Erfordernis geschaffen werden können. Im Vergleich zu den Lösungen des Standes der Technik, bei denen unterschiedliche Massenstromregel- oder Ventileinheiten als 3/2-Wegeventil und 4/3-Wegeventil vorgehalten werden müssen, kann eine Anpassung an die jeweiligen Erfordernisse bei der Montage der Anschlusseinrichtungen am Gehäuseteil der Massenstromregel- oder Ventileinheit erfolgen durch Befestigen der gerade benötigten Anschlusseinrichtungen an dem Gehäuseteil. Hierdurch wird eine nicht nur kostengünstige, sondern auch äußerst flexible, da modular aufgebaute Lösung geschaffen.

Um die Anschlusseinrichtung besonders gut an dem Gehäuseteil der Massenstromregel- oder Ventileinheit befestigen zu können, ist zumindest ein Niederhalterelement zum Niederhalten und Befestigen der Anschlusseinrichtungen an dem Gehäuseteil vorgesehen. Das zumindest eine Niederhalterelement übergreift dabei zumindest einen Abschnitt der jeweiligen Anschlusseinrichtungen, um diese auf dem Gehäuseteil zu halten und zu fixieren. Das zumindest eine Niederhalterelement kann insbesondere mit der zentralen Anschlusseinrichtung zum Anschließen an der zentralen Anschlussöffnung des Gehäuseteils versehen, insbesondere einstückig mit dieser ausgebildet oder mit der zentralen Anschlusseinrichtung verbunden sein. Das zumindest eine Niederhalterelement kann stoff-, kraft- oder formschlüssig, z.B. durch Ultraschallschweißen, Schrauben, Kleben etc. an dem Gehäuseteil befestigt werden. Dies kann insbesondere im Bereich der zentralen Anschlusseinrichtung vorgesehen sein. Dieser Bereich des Niederhalterelements kann einen vorkragenden stutzen- oder kragenartigen Abschnitt, der die zentrale Anschlussöffnung in der endseitigen Wandung des Gehäuseteils umgibt, übergreifen und sich an diesem festhalten.

Durch das Vorsehen der zumindest einen zentralen Anschlusseinrichtung in Befestigung an dem zumindest einen Niederhalterelement bzw. durch einstückiges Ausbilden der zentralen Anschlusseinrichtung und des zumindest einen Niederhalterelements kann das Niederhalterelement zugleich als beispielsweise Zustromanschluss zum Zuströmen von Medium in das Innere des Gehäuseteils der Massenstromregel- oder Ventileinheit genutzt werden.

Der Gehäuseteil kann ferner Fixierzapfen zum Fixieren des zumindest einen Niederhalterelements und der Anschlusseinrichtungen aufweisen, wobei die Fixierzapfen zwischen zumindest zwei Anschlussöffnungen angeordnet sind. Das zumindest eine Niederhalterelement kann dementsprechend Öffnungen aufweisen, die die Fixierzapfen übergreifen. Insbesondere kann sich das zumindest eine Niederhalterelement an den Fixierzapfen bzw. in deren Bereich festhalten. Das zumindest eine Niederhalterelement kann zum Festhalten und Zusammenwirken mit den Anschlusseinrichtungen deren zumindest einen seitlich auskragenden Flanschabschnitt überdecken. Der zumindest eine Flanschabschnitt der Anschlusseinrichtung kann schmal oder flügelartig ausgebildet sein zum Zusammenwirken mit dem Niederhalterelement der Massenstromregel- oder Ventileinheit. Das Niederhalterelement kann dabei beispielsweise in Richtung zu dem Gehäuseteil weisende randseitige gestufte Abschnitte aufweisen. Die Anschlusseinrichtungen können zumindest einen Haltesteg, wie z.B. einen gekrümmt ausgebildeten Haltesteg, zum Zusammenwirken mit dem randseitigen gestuften Abschnitt des Niederhalterelements aufweisen. Der zumindest eine Haltesteg der Anschlusseinrichtung passt mit dem zurückspringenden randseitigen Teil des gestuften Abschnitts zusammen, so dass eine im Wesentlichen geschlossene Umfangsfläche gebildet werden kann. Insbesondere ist das zumindest eine Niederhalterelement segmentiert ausgebildet, wobei Aussparungen zum Aufnehmen der Anschlusseinrichtungen, insbesondere von deren jeweiligem Kammerabschnitt, vorgesehen sind. Zwischen diesen Aussparungen sind jeweils geschlossene Flächen gebildet. Diese können jeweils mit zumindest einer Öffnung versehen sein, in der der jeweilige Fixierzapfen des Gehäuseteils der Massenstromregel- oder Ventileinheit aufgenommen wird.

Die Anschlusseinrichtungen können mit den Fixierzapfen zusammenwirkende oder zusammenwirkbare Einrichtungen zum Ausrichten und Fixieren der Position der Anschlusseinrichtungen aufweisen. Die mit den Fixierzapfen zusammenwirkende oder zusammenwirkbare Einrichtung der Anschlusseinrichtung kann beispielsweise zumindest ein Haltekragen oder Flanschabschnitt und/oder zumindest ein auskragendes, den Fixierzapfen umgreifbares oder umgreifendes oder aufnehmendes Element sein. Insbesondere kann zumindest ein mit zumindest einer Öffnung versehenes auskragendes Element zum Aufnehmen des Fixierzapfens in der zumindest einen Öffnung sein. Das mit der zumindest einen Öffnung versehene auskragende Element kann beispielsweise als Flanschabschnitt ausgebildet sein und zwei solcher Flanschabschnitte sich flügelartig etwa rechtwinklig von der Außenseite der Anschlusseinrichtung im Bereich von deren Kammerabschnitt abstehend erstrecken. Derartige Flanschabschnitte können auch als schmale kurze Abschnitte ohne eine solche Öffnung vorgesehen werden, wobei diese Flanschabschnitte ebenfalls von dem Niederhalterelement überdeckt und zum Niederhalten und Befestigen der Anschlusseinrichtungen auf dem Gehäuseteil der Massenstromregel- oder Ventileinheit genutzt werden. Solche schmalen Abschnitte können sich beispielsweise an den Fixierzapfen abstützen oder an diesen anlagern. Auch hierdurch ist, je nach Ausgestaltung der schmalen Abschnitte und der Fixierzapfen, eine gewisse Ausrichtung der Anschlusseinrichtungen möglich.

Die Anschlussöffnungen in dem Gehäuseteil der Massenstromregel- oder Ventileinheit können jeweils umlaufend mit Kragen und gegebenenfalls zusätzlich mit einem sich radial nach außen erstreckenden Flanschabschnitt versehen sein, mit dem ein entsprechender Halteabschnitt an den Anschlusseinrichtungen zum Ausrichten und Positionieren der Anschlusseinrichtungen an den Anschlussöffnungen zusammenwirken kann. Da das zumindest eine Niederhalterelement zum Halten bzw. Niederhalten und Fixieren bzw. Befestigen der Anschlusseinrichtung auf dem Gehäuseteil der Massenstromregel- oder Ventileinheit vorgesehen ist, können die entsprechenden Anschlussenden der Anschlusseinrichtungen einfach gestaltet werden. Sie weisen vorteilhaft lediglich zumindest einen Flanschabschnitt bzw. zumindest einen Haltekragen auf, der mit dem zumindest einen Niederhalterelement zusammenwirkt. Die Anschlusseinrichtungen selbst können dabei eine etwa zylindrische Bauform aufweisen, wobei grundsätzlich auch andere und beliebige Bauformen möglich sind. Bei Vorsehen einer der Zylinderform ähnlichen Bauform der Anschlusseinrichtungen, gegebenenfalls in abgewinkelter Form, kann eine sehr große Kompaktheit der Massenstromregel- oder Ventileinheit geschaffen werden, im Unterschied zu den Ausgestaltungen der Massenstromregel- oder Ventileinheiten des Standes der Technik. Die Ausgestaltung insbesondere des drehbaren Blendenelements bzw. der Steuerscheibe ist aufgrund der Anordnung im Innern des Gehäuseteils, also auf der der Anordnung des Niederhalterelementes gegenüberliegenden Seite der entsprechenden axialen Außenwandung des Gehäuseteils, die mit den Anschlussöffnungen zum Anschließen der Anschlusseinrichtungen versehen ist, völlig unabhängig von der Ausgestaltung der Anschlusseinrichtungen und des zumindest einen insbesondere mit der zentralen Anschlusseinrichtung versehenen Niederhalterelementes. Dementsprechend kann das drehbare Blendenelement, wie eine Steuerscheibe, beispielsweise ein im Wesentlichen flaches Scheibenelement mit zumindest zwei Durchgangsöffnungen sein oder beispielsweise als Tellerelement mit einem zentralen exponierten Plateaubereich, in dem oder an dem das Stellelement zum Ansteuern des drehbaren Blendenelements bzw. der Steuerscheibe gelagert wird.

Zur näheren Erläuterung der Erfindung werden im Folgenden Ausführungsbeispiele von dieser näher anhand der Zeichnungen beschrieben. Diese zeigen in:
- Figur 1: eine Längsschnittansicht durch eine erste Ausführungsform einer erfindungsgemäßen Massenstromregel- oder Ventileinheit,
- Figur 2: eine perspektivische Ansicht von unten auf die erfindungsgemäße Massenstromregel- oder Ventileinheit gemäß Figur 1, umfassend fünf erfindungsgemäße Anschlusseinrichtungen in Befestigung auf einem Gehäuseteil der Massenstromregel- oder Ventileinheit unter Zuhilfenahme eines erfindungsgemäßen Niederhalterelementes,
- Figur 3: eine Explosionsansicht der Massenstromregel- oder Ventileinheit gemäß Figur 2,
- Figur 4: eine perspektivische Ansicht einer Ausführungsform einer erfindungsgemäßen Anschlusseinrichtung mit flügelartigen, seitlich abstehenden Flanschabschnitten mit Durchgangsöffnungen,
- Figur 5: eine perspektivische Ansicht einer weiteren Ausführungsform einer erfindungsgemäßen Anschlusseinrichtung mit seitlich abstehenden flügelartigen Flanschabschnitten mit Durchgangsöffnungen,
- Figur 6: eine perspektivische Ansicht einer als Blindstopfen ausgebildeten Anschlusseinrichtung mit seitlich abstehenden flügelartigen Flanschabschnitten mit Durchgangsöffnungen,
- Figur 7: eine perspektivische Ansicht einer Ausführungsform einer mit Sensormittel und mit seitlich abstehenden flügelartigen Flanschabschnitten mit Durchgangsöffnungen versehenen erfindungsgemäßen Anschlusseinrichtung,
- Figur 8: eine gegenüber der Massenstromregel- oder Ventileinheit gemäß Figur 2 modifizierte Ausführungsform einer erfindungsgemäßen Massenstromregel- oder Ventileinheit mit modifizierten Anschlusseinrichtungen,
- Figur 9: eine Explosionsansicht der Massenstromregel- oder Ventileinheit gemäß Figur 8,
- Figur 10: eine Seiten- und teilweise Längsschnittansicht der Massenstromregel- oder Ventileinheit gemäß Figur 1, und
- Figur 11: eine Detail-Schnittansicht im Bereich einer abgewinkelten Anschlusseinrichtung der Massenstromregel- oder Ventileinheit gemäß Figur 10.

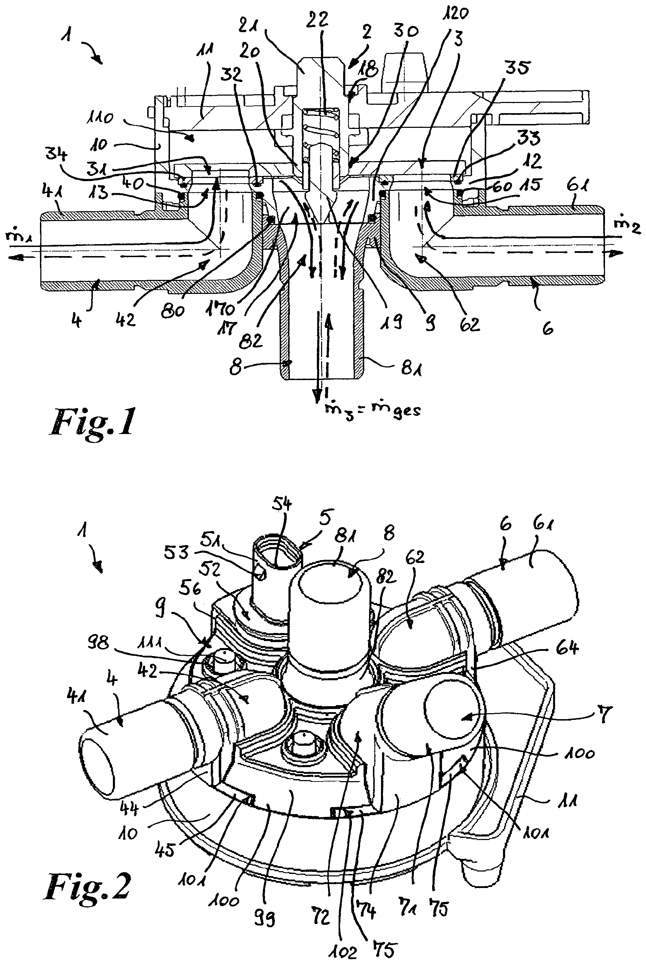

Figur 1 zeigt eine Längsschnittansicht durch eine Massenstromregel- oder Ventileinheit 1, die zum Regeln eines Massenstroms beispielsweise in einem Kühlmittelsystem eines Fahrzeugs dient. Die Massenstromregel- oder Ventileinheit 1 umfasst einen etwa zylindrischen Gehäuseteil 10, der an einem Ende mit einem über dessen Umfangserstreckung teilweise hinausgehenden Deckelteil 11 verschlossen ist. Der Deckelteil 11 dient zum Verbinden mit einem nicht gezeigten Aktuator bzw. einer Antriebs- oder Aktuatoreinheit, umfassend zumindest einen Aktuator mit z.B. einem Antriebsmotor und einem Getriebe. Die Antriebs- oder Aktuatoreinheit wird zum Antreiben eines. Stellelementes 2 verwendet, das mit einem drehbaren Blendenelement 3 bzw. einer Steuerscheibe im Innern des Gehäuseteils 10 verbunden ist. Das Stellelement 2 ist dementsprechend an einem Ende 20 drehfest mit dem drehbaren

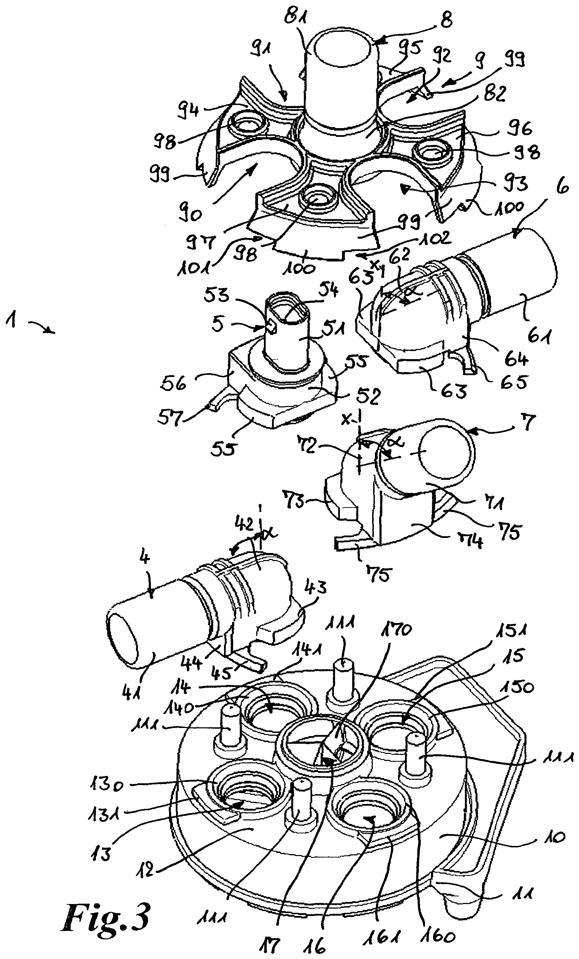

Blendenelement 3 in einer zentralen Öffnung 30 von diesem verbunden. Das drehbare Blendenelement 3 weist noch zwei weitere Durchgangsöffnungen 31 auf, von denen im Längsschnitt in Figur 1 lediglich eine Durchgangsöffnung 31 zu sehen ist. Das drehbare Blendenelement 3 bzw. die Steuerscheibe ist im Wesentlichen scheibenförmig flach ausgebildet und erstreckt sich benachbart zu einer axialen Außenwandung 12 des Gehäuseteils 10 der Massenstromregel-oder Ventileinheit 1, die einstückig mit dem Gehäuseteil ausgebildet ist und dem Deckelteil 11 gegenüberliegt. Die axiale Außenwandung 12 weist eine Anzahl von Anschlussöffnungen 13, 14, 15, 16, 17 auf, von denen in Figur 1 lediglich die Anschlussöffnungen 13, 15, 17 zu sehen sind, während in der Explosionsansicht nach Figur 3 auch die Anschlussöffnungen 14 und 16 zu sehen sind. Das Stellelement 2 umfasst gegenüberliegend zu dem Ende 20, das mit dem drehbaren Blendenelement 3 in Eingriff steht, ein zapfenförmiges Ende 21 auf. An dem zapfenförmigen Ende 21 kann die Aktuatoreinheit bzw. ein Getriebe von dieser angreifen, um das Stellelement 2 in eine Drehbewegung zu versetzen. Das zapfenförmige Ende 21 ist in dem Deckelteil 11 in einer darin vorgesehenen Durchgangsöffnung 18 gelagert. Über eine Schraubenfeder 22 ist das Stellelement 2 federnd in der axialen Außenwandung 12 des Gehäuseteils 10 auf einem dort angeordneten Lagerzapfen 19 gelagert. Der Lagerzapfen 19 ist in einem stutzenartigen Vorsprung 120 der axialen Außenwandung 12 des Gehäuseteils 10 der Massenstromregel- oder Ventileinheit 1 gelagert. Das drehbare Blendenelement 3 ist, da mit dem Stellelement 2 verbunden, über diesen radial geführt auf dem Lagerzapfen 19 gelagert. Um den Lagerzapfen 19 dort im Innern des stutzenartigen Vorsprungs 120 halten und lagern zu können, ist die Anschlussöffnung 17 durch Wandungsteile 170 segmentiert, wie insbesondere der Unteransicht des Gehäuseteils 10 in Draufsicht auf die axiale Außenwandung 12 in Figur 3 entnommen werden kann.

Im Bereich der Anschlussöffnungen 13 bis 17 sind Anschlusseinrichtungen 4, 5, 6, 7, 8 angeschlossen und über ein Niederhalterelement 9 fixiert bzw. befestigt. Der Bereich der Anschlussöffnungen 13 bis 17 ist somit die Schnittstelle, über die die Anschlusseinrichtungen 4 bis 8 an dem Gehäuseteil 10 befestigt sind. Die Anschlusseinrichtungen 4 bis 8 sowie das Niederhalterelement 9 können insbesondere auch den Figuren 2 und 3 besonders gut entnommen werden. In Figur 1 sind lediglich zwei Anschlusseinrichtungen 4, 6 gezeigt, die einander etwa gegenüberliegen und etwa rechtwinklig abgewinkelt sind, sowie die Anschlusseinrichtung 8, die einstückig mit dem Niederhalterelement 9 ausgebildet ist. Das Niederhalterelement 9 mit einstückig daran ausgebildeter Anschlusseinrichtung 8 ist in perspektivischer Ansicht in Figur 3 besonders gut zu sehen. Der Übergangsbereich der Anschlusseinrichtung 8 zum Niederhalterelement 9 ist ausgebaucht und auf den stutzenartigen Vorsprung 120 der axialen Außenwandung 12 des Gehäuseteils 10 aufgefügt und dort durch eine O-Ring-Dichtung 80 gegenüber dem stutzenartigen Vorsprung 120 nach außen und nach innen hin abgedichtet. Auch die Anschlusseinrichtung 4 ist gegenüber der Anschlussöffnung 13 bzw. einem um diese herum umlaufenden Kragen 130, wie er besonders gut Figur 3 entnommen werden kann, durch einen O-Ring 40 nach außen und nach innen abgedichtet. Auch die Anschlusseinrichtung 6 ist gegenüber der Anschlussöffnung 15 bzw. deren umlaufenden Kragen 150 durch einen O-Ring 60 nach außen und nach innen abgedichtet. Auch die beiden anderen Anschlussöffnungen 14 und 16 sind jeweils von einem umlaufenden Kragen 140, 160 umgeben und über einen entsprechenden O-Ring abgedichtet.

Wie ferner den Figuren 1, 10 und 11 noch entnommen werden kann, ist auch das drehbare Blendenelement 3 gegenüber der axialen Außenwandung 12 durch zwei O-Ringe 32, 33 abgedichtet. Die O-Ringe 32, 33 sind jeweils durch Ringscheibenelemente 34, 35 gehalten. Die Ringscheibenelemente 34, 35 können z.B. aus PVDF (Polyvinylidenfluorid) oder PTFE (Polytetrafluorethylen) bestehen, so dass sie gute Einlaufeigenschaften bezüglich des drehbaren Blendenelements 3, wenig Reibung und eine gute Anlage an dem drehbaren Blendenelement 3 zeigen, wobei sie zudem zusätzlich dichtend wirken. Anstelle eines Ringscheibenelements aus einem solchen sich einschleifenden Material, wie PVDF oder PTFE, kann das Ringscheibenelement 34 bzw. 35 auch als Federelement ausgebildet sein, das den O-Ring 33 unter Verspannung hält, um eine gute Dichtwirkung zu erzielen. Ein ungewollter Austritt von Medium aus dem Innenraum 110 bzw. dem Übergangsbereich von diesem zu den Anschlusseinrichtungen kann durch das Vorsehen der verschiedenen O-Ringe und der Ringscheibenelemente wirkungsvoll verhindert werden.

Zum Verbinden der Anschlusseinrichtungen 4 bis 8 mit Leitungen beispielsweise eines Kühlmittelsystems weisen diese jeweils einen Anschlussabschnitt 41, 51, 61, 71, 81 auf, wie besonders gut den Figuren 2 und 3 entnommen werden kann, bezüglich der Anschlusseinrichtungen 4, 6 und 8 auch der Figur 1. Ferner weisen die Anschlusseinrichtungen 4 bis 8 jeweils einen Kammerabschnitt 42, 52, 62, 72, 82 auf. Die Kammerabschnitte sind jeweils nicht im Bereich der Anschlussabschnitte der Anschlusseinrichtungen ausgebildet, sondern an dem gegenüberliegenden Ende, das mit den Anschlussöffnungen 13 bis 17 in der axialen Außenwandung 12 des Gehäuseteils 10 der Massenstromregel- oder Ventileinheit 1 verbunden sind.

Wie den Figuren 1 bis 3 besonders deutlich zu entnehmen ist, sind alle Anschlusseinrichtungen 4 bis 8 axial auf einer Seite des Gehäuseteils 10 der Massenstromregel- oder Ventileinheit 1 angeordnet, also nicht radial außenseitig an dem Gehäuseteil 10 von diesem. Um dennoch auch einen Anschluss von Leitungen in radialer Richtung bezüglich des Gehäuseteils 10 der Massenstromregel- oder Ventileinheit 1 vorsehen zu können, sind die drei Anschlusseinrichtungen 4, 6 und 7 jeweils abgewinkelt ausgebildet, wobei die beiden Anschlusseinrichtungen 4, 6 jeweils etwa in einem rechten Winkel, also einem Winkel α von α = 90°, zur Hochachse x des Gehäuseteils 10 abgewinkelt sind, während die Anschlusseinrichtung 7 etwa in einem Winkel α von α = 135° zur Hochachse x des Gehäuseteils 10 abgewinkelt ist. Da die vier Anschlussöffnungen 13, 14, 15, 16 gleichmäßig verteilt um die zentrale Anschlussöffnung 17 in der axialen Außenwandung 12 des Gehäuseteils 10 angeordnet sind, also in etwa in einem 90°-Winkel zueinander, sind auch die dort angeschlossenen Anschlusseinrichtungen 4 bis 7 etwa in einem rechten Winkel zu ihren jeweiligen Nachbar-Anschlusseinrichtungen angeordnet. Wie insbesondere den Figuren 2 und 3 weiter entnommen werden kann, ist die Anschlusseinrichtung 5 vollständig anders als die Anschlusseinrichtungen 4, 6, 7 und 8 ausgebildet. Der Anschlussabschnitt 51 der Anschlusseinrichtung 5 weist außenseitig eine Rastnase 53 auf, so dass eine verrastende Steckverbindung dort vorgesehen werden kann. Ferner ist der Anschlussabschnitt 51 nicht im Querschnitt rund, sondern hier im Querschnitt langoval ausgebildet. Selbstverständlich könnte dies auch anders, dieser also z.B. im Querschnitt rund ausgebildet sein. Im Innern des Anschlussabschnitts 51 ist ein Sensor, hier ein Temperatursensor 54, angeordnet, um die Temperatur des Mediums, das in den Kammerabschnitt 52 gelangt, ermitteln zu können. Auch in den Kammerabschnitten 42, 62, 72, 82 könnten jeweils Sensoren, wie Temperatursensoren, angeordnet werden, um die dort herrschende Temperatur zu ermitteln. Insbesondere kann sich der Temperatursensor 54 jedoch nicht nur in den Kammerabschnitt 52 der Anschlusseinrichtung 5 hinein erstrecken, sondern bis direkt unter den Ventilkörper bzw. die axiale Außenwandung 12 des Gehäuseteils 10, um die Temperatur des dort hindurch strömenden Mediums zu ermitteln.

Um die Anschlusseinrichtungen 4, 5, 6, 7 auf den jeweiligen Anschlussöffnungen 13, 14, 15, 16 zu befestigen bzw. deren jeweiligen umlaufenden Kragen 130, 140, 150, 160, ist zum Halten und Fixieren das Niederhalterelement 9 vorgesehen. Dieses übergreift im Bereich der jeweiligen Kammerabschnitte 42, 52, 62, 72 der vier Anschlusseinrichtungen 4, 5, 6, 7 vorkragende Flanschabschnitte 43, 55, 63, 73 an diesen. Das Niederhalterelement 9 ist dementsprechend segmentiert ausgebildet und weist vier etwa in einem Winkel von 90° zueinander angeordnete Aussparungen 90, 91, 92, 93 auf, in denen die Kammerabschnitte 42, 52, 62, 72 der Anschlusseinrichtungen 4, 5, 6, 7 aufgenommen werden. Dies ist in Figur 2 zu sehen. In den jeweils von den Aussparungen 90, 91, 92, 93 flankierten Segmenten 94, 95, 96, 97 ist jeweils eine Durchgangsöffnung 98 ausgebildet. Mit diesen Durchgangsöffnungen 98 übergreift das Niederhalterelement 9 zu dessen Befestigung und Verdrehsicherung auf der axialen Außenwandung 12 des Gehäuseteils 10 der Massenstromregel- oder Ventileinheit 1 vier Fixierzapfen 111. Diese sind in Figur 3 und die montierte Position des Niederhalterelementes 9 in Figur 2 zu sehen. Um auch für die Anschlusseinrichtungen im Bereich der Anschlussöffnungen 13 bis 16 eine leichtere Ausrichtung und Fixierung der Positionierung zu ermöglichen, sind radial nach außen weisend außenseitig an den umlaufenden Kragen 130, 140, 150, 160 der Anschlussöffnungen 13 bis 16 Flanschabschnitte 131, 141, 151, 161 gebildet. Diese werden von Halteabschnitten 44, 56, 64, 74 der Anschlusseinrichtungen 4, 5, 6, 7 jeweils übergriffen, wie dies Figur 2 entnommen werden kann. Um eine von außen geschlossene Umfangsfläche zu bilden und eine noch bessere Verdrehsicherung und einen besseren Halt von Niederhalterelement 9 und Anschlusseinrichtungen 4 bis 7 aneinander zu ermöglichen, erstrecken sich jeweils seitlich auskragend von den Halteabschnitten 44, 56, 64, 74 schmale Haltestege 45, 57, 65, 75, die entsprechend der Rundung des zylindrischen Teils des Gehäuseteils 10 gekrümmt sind. Die seitlich auskragenden Flanschabschnitte 43, 55, 63, 73 der Anschlusseinrichtung 4, 5, 6, 7 lagern insbesondere an den jeweiligen zu diesen benachbarten Fixierzapfen 111 an und bilden somit eine Auflagefläche für das Niederhalterelement 9. Zum Zusammenwirken mit den Haltestegen 45, 57, 65, 75 der Anschlusseinrichtung 4 bis 7 ist im Bereich der Segmente 94, 97 jeweils an deren Umfangswandung 99 eine gestufte Formgebung vorgesehen mit einem vorspringenden randseitigen Abschnitt 100 und zwei Aussparungen 101, 102 beidseitig benachbart zu diesem. Die Haltestege greifen in die Aussparungen ein und liegen in diesen, angrenzend an den vorspringenden randseitigen Abschnitt. Das Niederhalteelement 9 kann nach der Montage auf dem Gehäuseteil 10 an diesem nicht nur formschlüssig, sondern auch stoff- oder kraftschlüssig befestigt werden, beispielsweise durch Ultraschallschweißen, Schrauben, Kleben etc. Auch die Anschlusseinrichtungen 4, 5, 6, 7 können nach dem Montieren an dem Gehäuseteil 10 dort Stoff-, kraft- oder formschlüssig befestigt werden. Insbesondere kann eine unlösbare Befestigung auch hier über Ultraschallschweißen, Kleben etc. erfolgen. Die Anschlusseinrichtungen 4 bis 7 können somit im Bereich der Schnittstelle zu dem Gehäuseteil. 10 nach der Montage an diesem fest mit diesem verbunden werden.

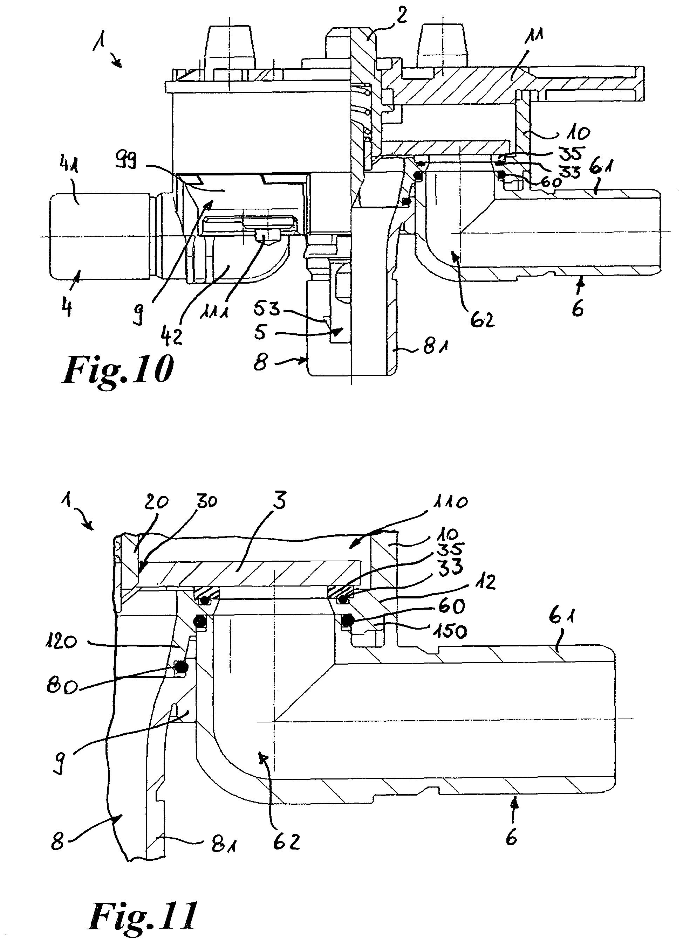

In den Figuren 10 und 11 ist jeweils die Ausführungsform der Massenstromregel-oder Ventileinheit 1 nach Figur 1 bis 3, im Detail in Figur 11 bzw. teilweise in Außenansicht in Figur 10 gezeigt. Gerade aus Figur 11 geht besonders gut die Positionierung der O-Ring-Dichtungen und der Ringscheibenelemente bzw. hier des Ringscheibenelements 35 hervor, die eine Abdichtung nach außen und nach innen bewirken. Aufgrund der Verwendung von radial angeordneten O-Ring-Dichtungen sind diese einfach zu montieren und kostengünstig im Vergleich zu sonst üblichen Flachdichtungen.

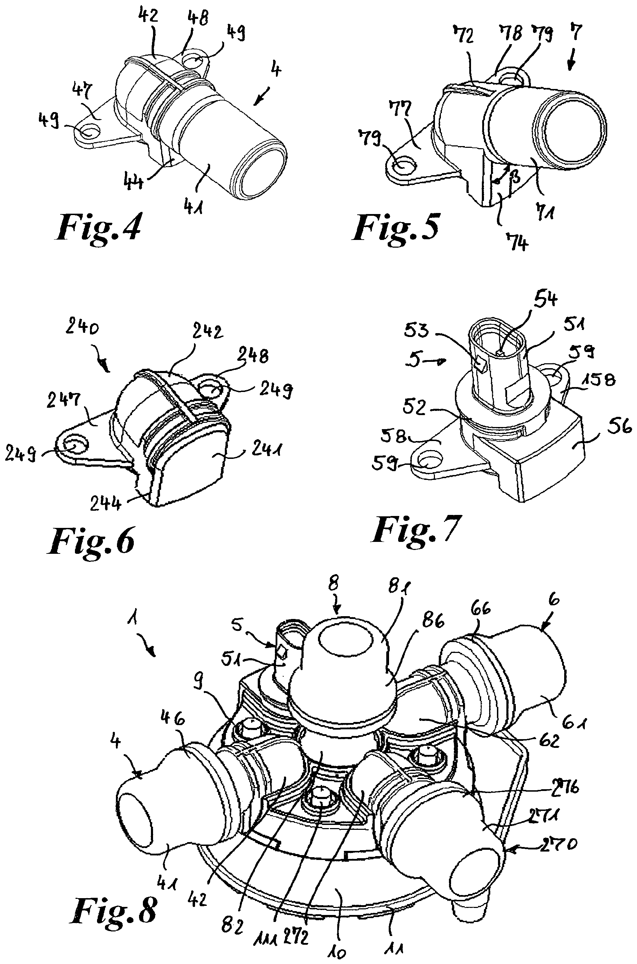

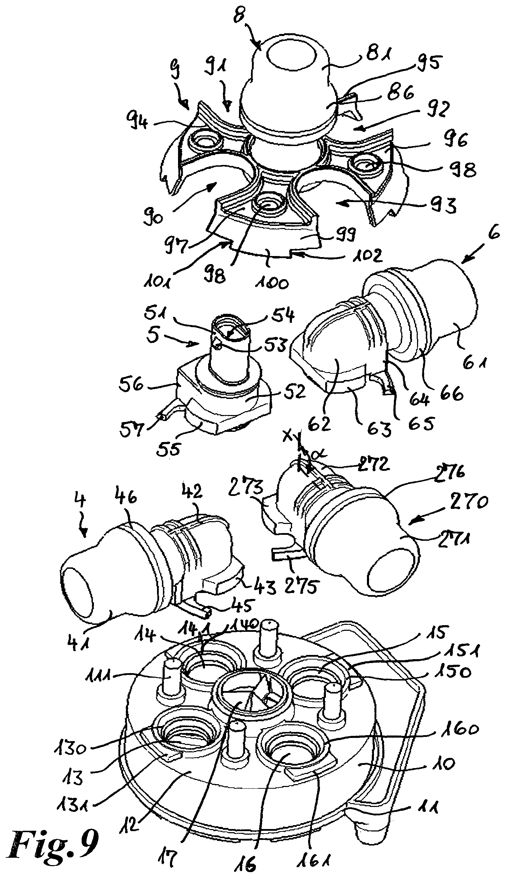

Die Figuren 8 und 9 zeigen lediglich eine Variante zu der in den Figuren 1 bis 3, 10 und 11 gezeigten Ausführungsvariante der Massenstromregel- oder Ventileinheit 1, wobei die Anschlusseinrichtungen 4, 6, 8, 270 jeweils als VDA-Kontur ausgebildet sind, somit eine jeweilige wulstartige Verdickung 46, 66, 86, 276 abgewandt von einer mit dem jeweiligen Anschlussabschnitt 41, 61, 81, 271 zu verbindenden, in den Figuren nicht gezeigten Leitung. Im Vergleich zu der Anschlusseinrichtung 7 weist auch die Anschlusseinrichtung 270 einen Kammerabschnitt 272, zwei Flanschabschnitte 273 und zwei seitlich abstehende Haltestege 275 auf. Die Anschlusseinrichtung 270 unterscheidet sich von der Anschlusseinrichtung 7 lediglich dadurch, dass diese in einem Winkel von etwa 90° zu ihrer Anordnungsfläche auf der axialen Außenwandung 12 des Gehäuseteils 10 der Massenstromregel- oder Ventileinheit 1 abgewinkelt ist. Im Prinzip sind die Anschlusseinrichtungen 4, 6 und 270 somit identisch ausgebildet, also als Gleichteile.

In den Figuren 4 bis 7 sind weitere Ausführungsvarianten von Anschlusseinrichtungen zum auswechselbaren Anschließen von diesen an den Gehäuseteil 10 der Massenstromregel- oder Ventileinheit 1 gezeigt. Beispielhaft sind hier Varianten der Anschlusseinrichtungen 4, 7 und 5 gezeigt (s. Figuren 4, 5 und 7). Die Anschlusseinrichtung 4 unterscheidet sich von der in den Figuren 1 bis 3 sowie 10 gezeigten Ausführungsvariante dadurch, dass anstelle des Flanschabschnitts 43 und der Haltestege 45 zwei seitlich an der Anschlusseinrichtung 4 auskragende flügelartige flache Flanschabschnitte 47, 48 vorgesehen sind. Diese weisen jeweils eine Durchgangsöffnung 49 auf. Die beiden Durchgangsöffnungen 49 können an den Fixierzapfen 111 fixiert werden, wobei die beiden der Anschlussöffnung 13 benachbarten Fixierzapfen 111 in den beiden Durchgangsöffnungen 49 der beiden auskragenden flügelartigen Flanschabschnitte 47, 48 aufgenommen werden. Die Anschlusseinrichtung 4 ist hierüber in ihrer Position auf dem Gehäuseteil 10 fixiert und gegen ein ungewolltes Verdrehen gesichert. Die auskragenden flügelartigen Flanschabschnitte 47, 48 werden nachfolgend von dem Niederhalterelement 9 überdeckt und die Anschlusseinrichtung 4 hierüber auf dem Gehäuseteil 10 fixiert und gehalten. Hierbei übergreift der Halteabschnitt 44 der Anschlusseinrichtung 4 wiederum den Flanschabschnitt 131 der Anschlussöffnung 13.

Die in Figur 5 gezeigte Anschlusseinrichtung 7 unterscheidet sich von der in den Figuren 2 und 3 gezeigten dadurch, dass die in Figur 5 gezeigte Anschlusseinrichtung 7 anstelle der Flanschabschnitte 73 und der Haltestege 75 auskragende flügelartige Flanschabschnitte 77, 78 mit dort jeweils hindurchgehenden Durchgangsöffnungen 79 aufweist. Auch die beiden auskragenden flügelartigen Flanschabschnitte 77, 78 ragen wiederum seitlich von der Anschlusseinrichtung 7 so ab, dass sie mit ihren Durchgangsöffnungen 79 die Fixierzapfen 111, die benachbart zu der Anschlussöffnung 16 angeordnet sind, übergreifen und hierüber die Anschlusseinrichtung 7 lagefixieren und positionsfixieren ggf. auch gegen ein Verdrehen sichern können. Über das Niederhalterelement 9 werden sie wiederum auf dem Gehäuseteil 10 bzw. dessen axialer Außenwandung 12 gehalten und fixiert. Der Halteabschnitt 74 stützt sich auch hier an dem Flanschabschnitt 161 der Anschlussöffnung 16 ab und dient somit auch ebenfalls der Lagefixierung der Anschlusseinrichtung 7.

Die in Figur 7 gezeigte Anschlusseinrichtung 5 unterscheidet sich von der in den Figuren 2 und 3 gezeigten lediglich dadurch, dass weder Flanschabschnitt 55 noch Haltesteg 57 vorgesehen sind, sondern stattdessen zwei einander etwa gegenüberliegende seitlich auskragende flügelartige Flanschabschnitte 58, 158 mit jeweiligen Durchgangsöffnungen 59. Mit den Durchgangsöffnungen 59 werden die auskragenden flügelartigen Flanschabschnitte 58, 158 wiederum an den Fixierzapfen 111, die beidseitig benachbart zu der Anschlussöffnung 14 vorgesehen sind, lagefixiert und gehalten sowie gegen ein Verdrehen gesichert. Dies wird durch den Halteabschnitt 56 unterstützt, der sich an dem Flanschabschnitt 141 der Anschlussöffnung 14 abstützt.

In Figur 6 ist eine Anschlusseinrichtung 240 gezeigt, die als Blindstopfen ausgebildet ist. Diese weist zwar einen Kammerabschnitt 242, jedoch keinen Anschlussabschnitt auf, sondern stattdessen eine den Kammerabschnitt 242 abschließende Wandung 241. Es ist somit kein Austritt von Medium durch die Anschlusseinrichtung 240 möglich oder vorgesehen, sondern vielmehr kann diese auf dem Gehäuseteil 10 angeordnet werden, wenn nicht vier die zentrale Anschlusseinrichtung umgebende Anschlusseinrichtungen von Medium durchströmt werden sollen, sondern weniger als vier. Insbesondere kann durch Vorsehen der als Blindstopfen ausgebildeten Anschlusseinrichtung 240 zwischen einem 3/2-Wegeventil, einem 4/3-Wegeventil und einem 5/4-Wegeventil gewechselt, also alle drei Varianten ausgebildet werden. Zum Anordnen auf dem Gehäuseteil 10 bzw. den darauf angeordneten Fixierzapfen 111 weist auch die Anschlusseinrichtung 240 wiederum zwei einander etwa gegenüberliegende auskragende flügelartige Flanschabschnitte 247, 248 mit dort hindurchgehenden Durchgangsöffnungen 249 auf. Zum Übergreifen und Positionieren an einem der Flanschabschnitte 131, 141, 151, 161 ist auch die als Blindstopfen ausgebildete Anschlusseinrichtung 240 mit einem Halteabschnitt 244 versehen. Da der zum Verbinden mit der jeweiligen Anschlussöffnung 13 bis 16 in der axialen Außenwandung 12 des Gehäuseteils 10 der Massenstromregel- oder Ventileinheit 1 vorgesehene Anschlussbereich der Anschlusseinrichtung 240 denen der anderen Anschlusseinrichtungen entspricht, ist ein beliebiger Austausch der Anschlusseinrichtungen untereinander problemlos möglich. Demensprechend werden von dem Niederhalterelement 9 die jeweils entweder mit den auskragenden flügelartigen Flanschabschnitten versehenen Anschlusseinrichtungen in dem Bereich ihrer Flanschabschnitte niedergehalten und auf dem Gehäuseteil 10 fixiert oder die mit den jeweiligen anderen Flanschabschnitten und Haltestegen versehenen Anschlusseinrichtungen. Jede der in den Figuren gezeigten Anschlusseinrichtungen weist eine im Wesentlichen zylindrische kompakte Bauform auf, so dass bei deren Positionieren auf der axialen Außenwandung 12 des Gehäuseteils 10 jeweils eine kompakte Bauform der Massenstromregel- oder Ventileinheit 1 geschaffen werden kann.

Wie in Figur 1 angedeutet, kann der Strömungsweg des Mediums durch die Massenstromregel- oder Ventileinheit 1 zum Ausbilden einer Mischfunktion beispielsweise mit einem Teilmassenstrom ṁ₁ durch die Anschlusseinrichtung 4 hinein, durch die Anschlussöffnung 13 sowie die Durchgangsöffnung 31 hindurch in den Innenraum 110 des Gehäuseteils 10 hinein und von dort durch eine in dem drehbar gelagerten Blendenelement 3 zentral vorgesehene Durchgangsöffnung hindurch in die Anschlusseinrichtung 8 hinein vorgesehen werden. Dies ist durch entsprechende Pfeile (als durchgezogene Linie dargestellt) in Figur 1 angedeutet. Ferner kann ein zweiter Massenstrom ṁ₂ durch die Anschlusseinrichtung 6 in den Gehäuseteil 10 der Massenstromregel- oder Ventileinheit 1 hinein, durch die Anschlussöffnung 15 im in der axialen Außenwandung 12 des Gehäuseteils 10, sofern in zumindest teilweiser Überdeckung angeordnet, durch eine der Durchgangsöffnungen 31 im drehbar gelagerten Blendenelement 3 hindurch den Innenraum 110 des Gehäuseteil 10 hinein und von dort durch eine Durchgangsöffnung im Zentrum des drehbar gelagerten Blendenelements 3 hindurch ebenfalls in die Anschlusseinrichtung 8 hinein strömen. Aus der Anschlusseinrichtung 8 strömt dann dementsprechend ein Gesamtmassenstrom ṁ₃ = ṁ_{ges} heraus, der sich aus der Summe der Einzelmassenströme ṁ₁ und ṁ₂ ergibt. Durch entsprechendes Ändern der zum Durchströmen zur Verfügung stehenden Öffnungen, die durch vollständiges oder nur teilweises Inüberdeckungbringen der Anschluss- und Durchgangsöffnungen gebildet werden, in den Innenraum 110 des Gehäuseteils 10 hinein und aus dieser durch in die Anschlusseinrichtung 8 hinein können z.B. die Temperatur und die Zusammensetzung des Massenstroms, der aus der Anschlusseinrichtung 8 hinausströmt, beeinflusst bzw. der Massenstrom reguliert werden.

Die Massenstromregel- oder Ventileinheit 1 dient jedoch nicht nur zum Mischen von Teilmassenströmen zu einem Gesamtmassenstrom, sondern auch zum Aufteilen eines Gesamtmassenstroms in Teilmassenströme. Beim Aufteilen kann zumindest bereichsweise stufenlos zumindest ein Massenstrom im Sinne eines Proportionalventils eingestellt werden, beispielsweise in einem Bereich von 0% bis 100%, insbesondere 30% bis 70% des Massenstroms. Soll eine Aufteilung eines Gesamtmassenstroms ṁ₃ = ṁ_{ges} auf Teilmassenströme ṁ₁ und ṁ₂ erfolgen, ist dies somit in umgekehrter Richtung zu der Mischrichtung möglich. Dies ist in Figur 1 durch die gestrichelten Pfeile angedeutet. Das Einstellen erfolgt durch entsprechendes Drehen des drehbar gelagerten Blendenelementes 3. Hierzu greift ein Antrieb bzw. Stellantrieb einer Antriebseinheit bzw. ein Stellglied an dem zapfenartigen Ende 21 des Stellelements 2 an.

Durch das Weglassen einer zusätzlichen Misch-oder Trennkammer und anstelle dessen Vorsehen von Kammerabschnitten an den einzelnen Anschlusseinrichtungen kann der erforderliche Bauraum der Massenstromregel-oder Ventileinheit gegenüber dem Stand der Technik deutlich vermindert werden. Ferner kann durch die Möglichkeit, auch zentral an, also in der Mitte, der axialen Außenwandung 12 des Gehäuseteils 10 eine Anschlusseinrichtung, hier in Kombination mit dem Niederhalterelement, vorzusehen weiterer Bauraum eingespart werden, so dass eine sehr kompakte Massenstromregel- oder Ventileinheit 1 geschaffen werden kann. Anstelle der gezeigten 90°- und 135°-Abwinkelungen können die Anschlusseinrichtungen auch noch in einem anderen Winkel abgewinkelt sein. Auch die Kontur insbesondere der Anschlussabschnitte der Anschlusseinrichtung können im Vergleich zu den in den Figuren gezeigten variiert werden.

### Bezugszeichenliste

- 1: Massenstromregel- oder Ventileinheit
- 2: Stellelement
- 3: drehbares Blendenelement
- 4: Anschlusseinrichtung
- 5: Anschlusseinrichtung
- 6: Anschlusseinrichtung
- 7: Anschlusseinrichtung
- 8: Anschlusseinrichtung
- 9: Niederhalterelement
- 10: Gehäuseteil
- 11: Deckelteil
- 12: axiale Außenwandung
- 13: Anschlussöffnung
- 14: Anschlussöffnung
- 15: Anschlussöffnung
- 16: Anschlussöffnung
- 17: zentrale Anschlussöffnung
- 18: Durchgangsöffnung
- 19: Lagerzapfen
- 20: Ende
- 21: zapfenförmiges Ende
- 22: Schraubenfeder
- 30: zentrale Öffnung
- 31: Durchgangsöffnung
- 32: O-Ring
- 33: O-Ring
- 34: Ringscheibenelement
- 35: Ringscheibenelement
- 40: O-Ring
- 41: Anschlussabschnitt
- 42: Kammerabschnitt
- 43: Flanschabschnitt
- 44: Halteabschnitt
- 45: Haltesteg
- 46: wulstartige Verdickung
- 47: auskragender flügelartiger Flanschabschnitt
- 48: auskragender flügelartiger Flanschabschnitt
- 49: Durchgangsöffnung
- 51: Anschlussabschnitt
- 52: Kammerabschnitt
- 53: Rastnase
- 54: Temperatursensor
- 55: Flanschabschnitt
- 56: Halteabschnitt
- 57: Haltesteg
- 58: auskragender flügelartiger Flanschabschnitt
- 59: Durchgangsöffnung
- 60: O-Ring
- 61: Anschlussabschnitt
- 62: Kammerabschnitt
- 63: Flanschabschnitt
- 64: Halteabschnitt
- 65: Haltesteg
- 66: wulstartige Verdickung
- 71: Anschlussabschnitt
- 72: Kammerabschnitt
- 73: Flanschabschnitt
- 74: Halteabschnitt
- 75: Haltesteg
- 77: auskragender flügelartiger Flanschabschnitt
- 78: auskragender flügelartiger Flanschabschnitt
- 79: Durchgangsöffnung
- 80: O-Ring
- 81: Anschlussabschnitt
- 82: Kammerabschnitt
- 86: wulstartige Verdickung
- 90: Aussparung
- 91: Aussparung
- 92: Aussparung
- 93: Aussparung
- 94: Segment
- 95: Segment
- 96: Segment
- 97: Segment
- 98: Durchgangsöffnung
- 99: Umfangswandung
- 100: vorspringender Abschnitt
- 101: Aussparung
- 102: Aussparung
- 110: Innenraum
- 111: Fixierzapfen
- 120: stutzenartiger Vorsprung
- 130: umlaufender Kragen
- 131: Flanschabschnitt
- 140: umlaufender Kragen
- 141: Flanschabschnitt
- 150: umlaufender Kragen
- 151: Flanschabschnitt
- 158: auskragender flügelartiger Flanschabschnitt
- 160: umlaufender Kragen
- 161: Flanschabschnitt
- 170: Wandungsteil
- 240: Anschlusseinrichtung/Blindstopfen
- 241: Wandung
- 242: Kammerabschnitt
- 244: Halteabschnitt
- 247: auskragender flügelartiger Flanschabschnitt
- 248: auskragender flügelartiger Flanschabschnitt
- 249: Durchgangsöffnung
- 270: Anschlusseinrichtung
- 271: Anschlussabschnitt
- 272: Kammerabschnitt
- 273: Flanschabschnitt
- 275: Haltesteg
- 276: wulstartige Verdickung
- α: Winkel
- β: Winkel
- x: Hochachse
- ṁ₁: Teilmassenstrom
- ṁ₂: Teilmassenstrom
- ṁ₃=ṁ_{ges}: Gesamtmassenstrom

## Patentansprüche

1. Massenstromregel- oder Ventileinheit (1), umfassend zumindest einen Gehäuseteil (10) mit einer Anzahl von Anschlusseinrichtungen (4,5,6,7,8,240,270) zum Anschließen von Leitungen, zumindest einen Ventilkörper (3,12) und zumindest ein Stellelement (2) zum Ansteuern des zumindest einen Ventilkörpers, wobei der zumindest eine Ventilkörper zumindest ein drehbares bzw. drehbar gelagertes Blendenelement (3) und zumindest ein feststehendes Blendenteil (12) umfasst, die Anschlusseinrichtungen (4,5,6,7,240,270) über zumindest eine Schnittstelle an dem Gehäuseteil (10) lösbar oder dauerhaft befestigt angeordnet sind und der Gehäuseteil (10) Anschlussöffnungen (13,14,15,16,17) zum Anschließen der Anschlusseinrichtungen (4,5,6,7,240,270) aufweist, wobei alle Anschlussöffnungen (13,14,15,16,17) auf einer Seite (12) des Gehäuseteils (10) angeordnet sind,
**dadurch gekennzeichnet, dass**
ein Niederhalterelement (9) zum Niederhalten und Befestigen der Anschlusseinrichtungen (4,5,6,7,240,270) an dem Gehäuseteil (10) vorgesehen ist, wobei das eine Niederhalterelement (9) zumindest einen Abschnitt der jeweiligen Anschlusseinrichtungen (4,5,6,7,240,270) übergreift, um diese auf dem Gehäuseteil (10) zu halten und zu fixieren.

2. Massenstromregel- oder Ventileinheit (1) nach Anspruch 1,
**dadurch gekennzeichnet, dass**
die Anschlusseinrichtungen (4,5,6,7,240,270) benachbart zu dem Ventilkörper (3,12) angeordnet sind oder sich bis an den Ventilkörper (3,12) oder bis nahezu an den Ventilkörper (3,12) erstrecken.

3. Massenstromregel- oder Ventileinheit (1) nach einem der vorstehenden Ansprüche,
**dadurch gekennzeichnet, dass**
der Gehäuseteil (10) und/oder die Anschlusseinrichtungen (4,5,6,7,240,270) dahingehend konfiguriert sind, dass ein 3/2-Wegeventil, ein 4/3-Wegeventil oder ein 5/4-Wegeventil ausbildbar oder ausgebildet ist.

4. Massenstromregel- oder Ventileinheit (1) nach einem der vorstehenden Ansprüche,
**dadurch gekennzeichnet, dass**
eine zentrale Anschlussöffnung (17) und diese umgebend weitere Anschlussöffnungen (13,14,15,16) vorgesehen sind, wobei die weiteren Anschlussöffnungen (13,14,15,16) im Wesentlichen gleich ausgebildet sind.

5. Massenstromregel- oder Ventileinheit (1) nach Anspruch 4,
**dadurch gekennzeichnet, dass**
das eine Niederhalterelement (9) mit der zentralen Anschlusseinrichtung (8) zum Anschließen an der zentralen Anschlussöffnung (17) des Gehäuseteils (10) versehen, insbesondere einstückig mit dieser ausgebildet oder mit der zentralen Anschlusseinrichtung (8) verbunden, ist.

6. Massenstromregel- oder Ventileinheit (1) nach einem der Ansprüche 1 bis 5,
**dadurch gekennzeichnet, dass**
der Gehäuseteil (10) Fixierzapfen (111) zum Fixieren des einen Niederhalterelements (9) und der Anschlusseinrichtungen (4,5,6,7,240,270) aufweist, wobei die Fixierzapfen (111) zwischen zumindest zwei Anschlussöffnungen (13,14,15,16) anordnet sind.

7. Massenstromregel- oder Ventileinheit (1) nach Anspruch 6,
**dadurch gekennzeichnet, dass**
die Anschlusseinrichtungen (4,5,6,7,240,270) mit den Fixierzapfen (111) zusammenwirkende oder zusammenwirkbare Einrichtungen (43,47,48,55,58,63,73,77,78,158,247,248) zum Fixieren der Position der Anschlusseinrichtungen (4,5,6,7,240,270) aufweisen, insbesondere die mit dem Fixierzapfen (111) zusammenwirkende oder zusammenwirkbare Einrichtung zumindest ein Haltekragen oder Flanschabschnitt (43,55,63,73) und/oder zumindest ein auskragendes, den Fixierzapfen (111) umgreifbares oder umgreifendes oder aufnehmendes Element (47,48,58,77,78,158,247,248), insbesondere zumindest ein mit zumindest einer Öffnung (49,59,79,249) versehenes auskragendes Element (47,48,58,77,78,158,247,248) zum Aufnehmen des Fixierzapfens (111) in der zumindest einen Öffnung (49,59,79,249) ist.

8. Massenstromregel- oder Ventileinheit (1) nach einem der vorstehenden Ansprüche,
**dadurch gekennzeichnet, dass**
die Anschlusseinrichtung (4,5,6,7,8,240,270) in einem Winkel (α, β) von 0° bis 135° abgewinkelt ist, insbesondere in einem Winkel von 0° oder 90° oder 135°.

9. Massenstromregel- oder Ventileinheit (1) nach einem der vorstehenden Ansprüche,
**dadurch gekennzeichnet, dass**
der Gehäuseteil (10) im Bereich der Anschlussöffnungen (13,14,15,16,17) zum Anschließen der Anschlusseinrichtungen (4,5,6,7,8,240,270) den feststehenden Blendenteil (12) des Scheibenventils bildet, wobei durch Rotieren des drehbaren Blendenelements (3) gegenüber dem feststehenden Blendenteil (12) ein dort hindurch strömender oder hindurch strömbarer Massenstrom einstellbar ist.

10. Massenstromregel- oder Ventileinheit (1) nach einem der vorstehenden Ansprüche,
**dadurch gekennzeichnet, dass**
die Anschlusseinrichtung (4,5,6,7,8,240,270) zumindest einen Kammerabschnitt (42,52,62,72,82,242,272) und zumindest einen Anschlussabschnitt (41,51,61,71,81,271) aufweist und/oder zumindest eine der Anschlusseinrichtungen (240) als Blindstopfen ausgebildet ist.

11. Massenstromregel- oder Ventileinheit (1) nach einem der vorstehenden Ansprüche,
**dadurch gekennzeichnet, dass**
zumindest eine radiale Abdichtung (32,33,40,60,80) im Verbindungsbereich zwischen Anschlusseinrichtung (4,5,6,7,8,240,270) und Anschlussöffnung (13,14,15,16,17) im Gehäuseteil (10) vorgesehen ist.

12. Massenstromregel- oder Ventileinheit (1) nach einem der vorstehenden Ansprüche,
**dadurch gekennzeichnet dass**,
zumindest ein sensorisches Mittel (54) im Bereich der zumindest einen Anschlusseinrichtung (5) vorgesehen ist, insbesondere hineinragend in das Innere des Anschlussabschnitts (55) der Anschlusseinrichtung (5) und/oder plan in einer Gehäusewandung des Gehäuseteils (10) der Massenstromregel- oder Ventileinheit (1).

13. Massenstromregel- oder Ventileinheit (1) nach einem der Ansprüche 6 bis 7,
**dadurch gekennzeichnet, dass**
die Anschlusseinrichtung (4,5,6,7,240,270) zumindest einen seitlich auskragenden Flanschabschnitt (43,47,48,55,58,63,73,77,78,158,247, 248,273) zum Befestigen der Anschlusseinrichtung (4,5,6,7,240,270) an der Massenstromregel- oder Ventileinheit (1) und zumindest einen Anschlussabschnitt (41, 51,61,71,81,271) zum Anschließen einer Leitung an der Anschlusseinrichtung (4,5,6,7,240,270) aufweist, wobei zumindest ein gekrümmt ausgebildeter Haltesteg (45,57,65,75,275) zum Zusammenwirken mit einem Niederhalterelement (9) der Massenstromregel- oder Ventileinheit (1) vorgesehen ist und/oder die Anschlusseinrichtung (4,5,6,7,240,270) mit Fixierzapfen (111) des Gehäuseteils (10) der Massenstromregel- oder Ventileinheit (1) zusammenwirkende oder zusammenwirkbare Einrichtungen in Form zumindest eines Haltekragens oder Flanschabschnitts und/oder zumindest eines auskragenden, den Fixierzapfen (111) umgreifbaren oder umgreifenden oder aufnehmenden Elements zum Ausrichten und Fixieren der Position der Anschlusseinrichtung (4,5,6,7,240,270) aufweist.

14. Massenstromregel- oder Ventileinheit (1) nach Anspruch 13,
**dadurch gekennzeichnet, dass**
der Flanschabschnitt (47,48,58,77,78,158,247,248) mit zumindest einer Öffnung (49,59,79,249) versehen ist zum Aufstecken des Flanschabschnitts auf den Fixierzapfen (111).

## Claims

1. Mass flow regulator or valve unit (1), comprising at least one housing part (10) having a number of connection devices (4, 5, 6, 7, 8, 240, 270) for the connection of lines, at least one valve body (3, 12) and at least one actuator element (2) for actuation of the at least one valve body,
wherein
the at least one valve body comprises at least one rotatable or rotatably mounted diaphragm element (3) and at least one fixed diaphragm element (12), the connection devices (4, 5, 6, 7, 240, 270) are arranged such that they are releasably or permanently secured to the housing part (10) via at least one interface, and the housing part (10) has connection openings (13, 14, 15, 16, 17) for connection of the connection devices (4, 5, 6, 7, 240, 270), wherein all the connection openings (13, 14, 15, 16, 17) are arranged on one side (12) of the housing part (10), **characterised in that**
a hold-down element (9) for holding down and securing the connection devices (4, 5, 6, 7, 240, 270) onthe housing part (10) is provided, wherein the hold-down element (9) engages over at least a portion of the respective connection devices (4, 5, 6, 7, 240, 270) in order to hold and fix them on the housing part (10).

2. Mass flow regulator or valve unit (1) according to claim 1,
**characterised in that**
the connection devices (4, 5, 6, 7, 240, 270) are arranged adjacent to the valve body (3, 12) or extend up to the valve body (3, 12) or almost up to the valve body (3, 12).

3. Mass flow regulator or valve unit (1) according to any one of the preceding claims,
**characterised in that**
the housing part (10) and/or the connection devices (4, 5, 6, 7, 240, 270) are configured such that a 3/2-way valve, a 4/3-way valve or a 5/4-way valve can be formed or is formed.

4. Mass flow regulator or valve unit (1) according to any one of the preceding claims,
**characterised in that**
a central connection opening (17) and further connection openings (13, 14, 15, 16) surrounding the central connection opening are provided, wherein the further connection openings (13, 14, 15, 16) are of substantially identical form.

5. Mass flow regulator or valve unit (1) according to claim 4,
**characterised in that**
the hold-down element (9) is provided with the central connection device (8) for connection to the central connection opening (17) of the housing part (10), in particular is formed integrally therewith or is connected to the central connection device (8).

6. Mass flow regulator or valve unit (1) according to any one of claims 1 to 5,
**characterised in that**
the housing part (10) has fixing pins (111) for fixing the hold-down element (9) and the connection devices (4, 5, 6, 7, 240, 270), wherein the fixing pins (111) are arranged between at least two connection openings (13, 14, 15, 16).

7. Mass flow regulator or valve unit (1) according to claim 6,
**characterised in that**
the connection devices (4, 5, 6, 7, 240, 270) have devices (43, 47, 48, 55, 58, 63, 73, 77, 78, 158, 247, 248) which cooperate or are able to cooperate with the fixing pins (111) in order to fix the position of the connection devices (4, 5, 6, 7, 240, 270), in particular the device which cooperates or is able to cooperate with the fixing pin (111) is at least one retaining collar or flange portion (43, 55, 63, 73) and/or at least one protruding element (47, 48, 58, 77, 78, 158, 247, 248) which is able to engage around or engages around or receives the fixing pin (111), in particular at least one protruding element (47, 48, 58, 77, 78, 158, 247, 248) provided with at least one opening (49, 59, 79, 249) for receiving the fixing pin (111) in the at least one opening (49, 59, 79, 249).

8. Mass flow regulator or valve unit (1) according to any one of the preceding claims,
**characterised in that**
the connection device (4, 5, 6, 7, 8, 240, 270) is bent at an angle (α, β) of from 0° to 135°, in particular at an angle of 0° or 90° or 135°.

9. Mass flow regulator or valve unit (1) according to any one of the preceding claims,
**characterised in that**
the housing part (10) in the region of the connection openings (13, 14, 15, 16, 17) for connection of the connection devices (4, 5, 6, 7, 8, 240, 270) forms the fixed diaphragm part (12) of the disc valve, wherein by rotation of the rotatable diaphragm element (3) relative to the fixed diaphragm part (12) a mass flow which flows or is able to flow therethrough can be adjusted.

10. Mass flow regulator or valve unit (1) according to any one of the preceding claims,
**characterised in that**
the connection device (4, 5, 6, 7, 8, 240, 270) has at least one chamber portion (42, 52, 62, 72, 82, 242, 272) and at least one connection portion (41, 51, 61, 71, 81, 271) and/or at least one of the connection devices (240) is in the form of a blind plug.

11. Mass flow regulator or valve unit (1) according to any one of the preceding claims,
**characterised in that**
at least one radial seal (32, 33, 40, 60, 80) is provided in the housing part (10) in the connection region between the connection device (4, 5, 6, 7, 8, 240, 270) and the connection opening (13, 14, 15, 16, 17).

12. Mass flow regulator or valve unit (1) according to any one of the preceding claims,
**characterised in that**
at least one sensor means (54) is provided in the region of the at least one connection device (5), in particular projectinginto the interior of the connection portion (55) of the connection device (5) and/or flush in a housing wall of the housing part (10) of the mass flow regulator or valve unit (1).

13. Mass flow regulator or valve unit (1) according to any one of claims 6 to 7,
**characterised in that**
the connection device (4, 5, 6, 7, 240, 270) has at least one laterally protruding flange portion (43, 47, 48, 55, 58, 63, 73, 77, 78, 158, 247, 248, 273) for securing the connection device (4, 5, 6, 7, 240, 270) to the mass flow regulator or valve unit (1) and at least one connection portion (41, 51, 61, 71, 81, 271) for connection of a line to the connection device (4, 5, 6, 7, 240, 270), wherein at least one retaining bar (45, 57, 65, 75, 275) of curved form for cooperation with a hold-down element (9) of the mass flow regulator or valve unit (1) is provided and/or the connection device (4, 5, 6, 7, 240, 270) has devices in the form of at least one retaining collar or flange portion which cooperate or are able to cooperate with fixing pins (111) of the housing part of the mass flow regulator or valve unit (1) and/or at least one protruding element which is able to engage around or engages around or receives the fixing pin (111) for aligning and fixing the position of the connection device (4, 5, 6, 7, 240, 270).

14. Mass flow regulator or valve unit (1) according to claim 13,
**characterised in that**
the flange portion (47, 48, 58, 77, 78, 158, 247, 248) is provided with at least one opening (49, 59, 79, 249) for fitting the flange portion onto the fixing pin (111).

## Revendications

1. Régulateur de débit massique ou unité de vanne (1), comprenant au moins une partie de boîtier (10) avec plusieurs dispositifs de raccordement (4, 5, 6, 7, 8, 240, 270) pour raccorder des conduites, au moins un corps de vanne (3, 12) et au moins un élément d'actionnement pour actionner le au moins un corps de vanne, dans lequel l'au moins un corps de vanne comprend au moins un élément de diaphragme (3) rotatif ou monté de manière rotative et au moins un corps de diaphragme fixe (12), les dispositifs de raccordement (4, 5, 6, 7, 240, 270) sont fixés à la partie de boîtier (10) via au moins une interface de manière amovible ou permanente et la partie de boîtier (10) présente des ouvertures de raccordement (13, 14, 15, 16, 17) pour connecter les dispositifs de raccordement (4, 5, 6, 7, 240, 270), dans lequel toutes les ouvertures de raccordement (13, 14, 15, 16, 17) sont disposées sur un côté (12) de la partie de boîtier (10), **caractérisé en ce qu'**un élément de maintien (9) est prévu pour maintenir en place et fixer les dispositifs de raccordement (4, 5, 6, 7, 240, 270) sur la partie de boîtier (10), l'élément de maintien (9) présentant la section d'au moins l'un des dispositifs de raccordement respectifs (4, 5, 6, 7, 240, 270) afin de les maintenir et de les fixer sur la partie de boîtier (10).

2. Régulateur de débit massique ou unité de vanne (1) selon la revendication 1, **caractérisé en ce que** les dispositifs de raccordement (4, 5, 6, 7, 240, 270) sont adjacents au corps de vanne (3, 12) ou s'étendent jusqu'au corps de vanne (3, 12) ou presque jusqu'au corps de vanne (3, 12).

3. Régulateur de débit massique ou unité de vanne (1) selon l'une des revendications précédentes, **caractérisé en ce que** la partie de boîtier (10) et/ou les dispositifs de raccordement (4, 5, 6, 7, 240, 270) sont configurés de manière à former une vanne 3/2 voies, une vanne 4/3 voies ou une vanne 5/4 voies.

4. Régulateur de débit massique ou unité de vanne (1) selon l'une des revendications précédentes, **caractérisé en ce qu'**une ouverture centrale de raccordement (17) et autour de celle-ci d'autres ouvertures de raccordement (13, 14, 15, 16) sont prévues, les autres ouvertures de raccordement (13, 14, 15, 16) étant essentiellement identiques.

5. Régulateur de débit massique ou unité de vanne (1) selon la revendication 4, **caractérisé en ce que** l'élément de maintien (9) est relié au dispositif de raccordement central (8), ou formé d'une seule pièce avec celui-ci, pour le raccordement à l'ouverture centrale de raccordement (17) de la partie de boîtier (10).

6. Régulateur de débit massique ou unité de vanne (1) selon l'une quelconque des revendications 1 à 5, **caractérisé en ce que** la partie de boîtier (10) présente des tenons de fixation (111) pour fixer l'élément de maintien (9) et les dispositifs de raccordement (4, 5, 6, 7, 240, 270), dans lequel les tenons de fixation (111) sont disposés entre au moins deux ouvertures de raccordement (13, 14, 15, 16).

7. Régulateur de débit massique ou unité de vanne (1) selon la revendication 6, **caractérisé en ce que** les dispositifs de raccordement (4, 5, 6, 7, 240, 270) comprennent des éléments (43, 47, 48, 55, 58, 63, 73, 77, 78, 158, 247, 248) coopérant ou pouvant coopérer avec les tenons de fixation (111) pour fixer la position des dispositifs de raccordement (4, 5, 6, 7, 240, 270), en particulier ces éléments coopérant ou pouvant coopérer avec les tenons (111) comprennent une collerette de retenue ou une portion de bride (43, 55, 63, 73) et/ou au moins une partie en porte-à-faux (47, 48, 58, 77, 78, 158, 247, 248), qui dépasse pour entourer ou recevoir le tenon de fixation (111), en particulier au moins un élément doté d'au moins une partie en porte-à-faux (47, 48, 58, 77, 78, 158, 247, 248) munie d'au moins une ouverture (49, 59, 79, 249) pour recevoir le tenon de fixation (111) dans ladite au moins une ouverture (49, 59, 79, 249).

8. Régulateur de débit massique ou unité de vanne (1) selon l'une des revendications précédentes, **caractérisé en ce que** le dispositif de raccordement (4, 5, 6, 7, 8, 240, 270) est coudé à un angle (α, β) de 0° à 135°, notamment d'un angle de 0° ou 90° ou 135°.

9. Régulateur de débit massique ou unité de vanne (1) selon l'une des revendications précédentes, **caractérisé en ce que** la partie de boîtier (10) dans la région des ouvertures de raccordement (13, 14, 15, 16, 17) pour raccorder les dispositifs de raccordement (4, 5, 6, 7, 8, 240, 270) forme une partie de diaphragme fixe (12) de la vanne à disque, dans laquelle, par rotation de l'élément de diaphragme rotatif (3) par rapport vers la partie de diaphragme fixe (12) un débit massique qui la traverse ou peut la traverser est réglable.

10. Régulateur de débit massique ou unité de vanne (1) selon l'une des revendications précédentes, **caractérisé en ce que** le dispositif de raccordement (4, 5, 6, 7, 8, 240, 270) présente au moins une section de chambre (42, 52, 62, 72, 82, 242, 272) et au moins une section de raccordement (41, 51, 61, 71, 81, 271) et/ou au moins un des dispositifs de raccordement (240) est conçu comme un obturateur.

11. Régulateur de débit massique ou unité de vanne (1) selon l'une des revendications précédentes, **caractérisé en ce qu'**au moins un joint radial (32, 33, 40, 60, 80) dans la zone de raccordement entre le dispositif de raccordement (4, 5, 6, 7, 8, 240, 270) et une ouverture de raccordement (13, 14, 15, 16, 17) est prévu dans la partie de boîtier (10).

12. Régulateur de débit massique ou unité de vanne (1) selon l'une des revendications précédentes, **caractérisé en ce qu'**au moins un moyen de capteur (54) est prévu dans la zone du au moins un dispositif de raccordement (5), en particulier en saillie à l'intérieur de la section de raccordement (55) du dispositif de raccordement (5) et/ou à plat dans une paroi de boîtier de la partie de boîtier (10) du régulateur de débit massique ou de l'unité de vanne (1).

13. Régulateur de débit massique ou unité de vanne (1) selon l'une des revendications 6 à 7, **caractérisé en ce que** le dispositif de raccordement (4, 5, 6, 7, 240, 270) comprend au moins une portion de bride faisant saillie latéralement (43, 47, 48, 55, 58, 63, 73, 77, 78, 158, 247, 248) pour la fixation du dispositif de raccordement (4, 5, 6, 7, 240, 270) au régulateur de débit massique ou à l'unité de vanne (1) et au moins une section de raccordement (41, 51, 61, 71, 81, 271) pour raccorder une conduite au dispositif de raccordement (4, 5, 6, 7, 240, 270), dans lequel au moins une barrette de retenue (45, 57, 65, 75, 275) de forme incurvée est prévue pour coopérer avec un élément de maintien (9) du régulateur de débit massique ou de l'unité de vanne (1) et/ou l'élément de raccordement (4, 5, 6, 7, 240, 270) comprend des éléments coopérant ou pouvant coopérer avec les tenons de fixation (111) pour fixer la position des dispositifs de raccordement (4, 5, 6, 7, 240, 270), en particulier ces éléments coopérant ou pouvant coopérer avec les tenons (111) du régulateur de débit massique ou de l'unité de vanne (1) comprennent une collerette de retenue ou une portion de bride et/ou au moins une partie en porte-à-faux pouvant entourer ou entourant le tenon de fixation (111) pour aligner et fixer la position du dispositif de raccordement (4, 5, 6, 7, 240, 270).

14. Régulateur de débit massique ou unité de vanne (1) selon la revendication 13, **caractérisé en ce que** la portion de bride (47, 48, 58, 77, 78, 158, 247, 248) présente au moins une ouverture (49, 59, 79, 249) pour emboîter le tronçon de bride sur un tenon de fixation (111).
